# EUROPÄISCHE PATENTSCHRIFT

(11) **EP 1 544 087 B1**
(45) Veröffentlichungstag und Bekanntmachung des Hinweises auf die Patenterteilung: **10.10.2007**
(21) Anmeldenummer: 04028260.0
(22) Anmeldetag: 29.11.2004
(51) Int. Cl.: B62D 33/02, B60J 7/16

(54) **Vorrichtung zum Anheben und Absenken eines über Rungen abgestützen Daches eines Nutzfahrzeugaufbaus**
Device for lifting and lowering of a , by stanchions supported , roof of a transport vehicle .
Dispositif à lever et baisser le toit , supporté par des rangers , d'un véhicule de transport .

(30) Priorität: 16.12.2003 DE 20319531 U; 27.05.2004 DE 202004008414 U
(43) Veröffentlichungstag der Anmeldung: 22.06.2005
(73) Patentinhaber: F. HESTERBERG & SÖHNE GmbH & Co. KG, 58256 Ennepetal (DE)
(72) Erfinder: Bosch, Heiko, 58339 Breckerfeld (DE)
(74) Vertreter: Christophersen, Ruth

(56) Entgegenhaltungen:
- DE-A1- 3 138 338
- DE-C1- 19 509 590
- DE-U- 29 907 916

## Beschreibung

Die Erfindung betrifft eine Vorrichtung zum Anheben und Absenken eines über Rungen abgestützten Daches eines Nutzfahrzeugaufbaus, mit einem an einer Runge befestigbaren Gehäuse, einem relativ zu dem Gehäuse auf- und abwärts bewegbaren Hubglied, einer Kolben- und Zylindereinheit, deren Kolben und Zylinder einen beweglichen und einen unbeweglichen Teil bilden, von denen der bewegliche Teil mit dem Hubglied verbunden ist und der unbewegliche Teil am Gehäuse befestigt ist, einem relativ zu dem Gehäuse auf- und abwärts bewegbaren Schubglied, einem mit einer Handhabe ausgebildeten Kniehebelantrieb zum Auf- und Abwärtsbewegen des Schubgliedes und einer Kupplung zum kraftschlüssigen Verbinden des Schub- und des Hubgliedes derart, daß bei einer Aufwärtsbewegung des Schubgliedes das Hubglied und der bewegliche Teil der Kolben- und Zylindereinheit mitbewegt werden.

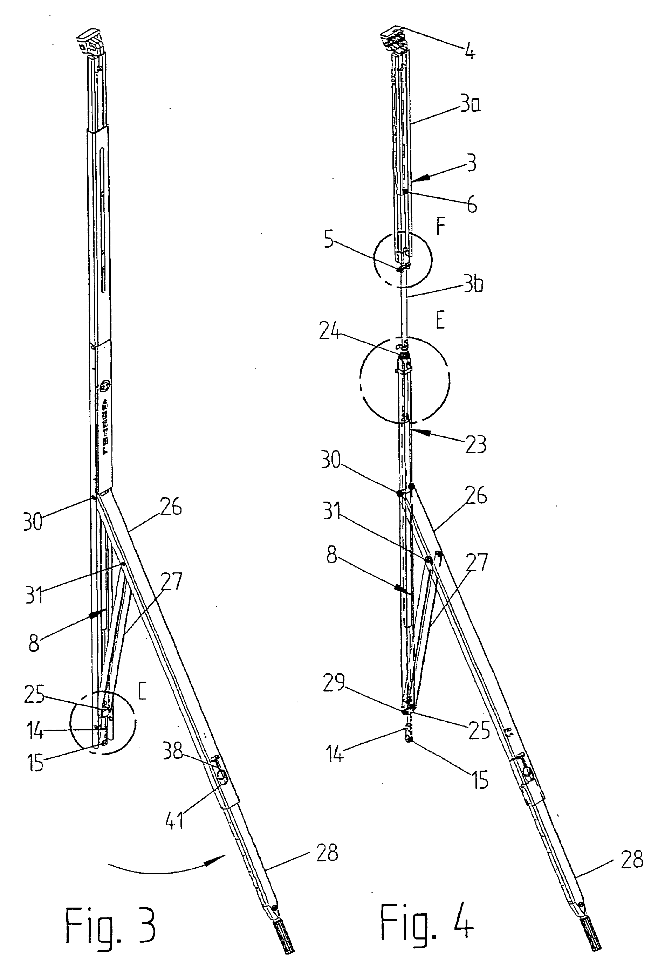

Eine solche Vorrichtung ist aus unserem Gebrauchsmuster 298 07 741, insbesondere Figuren 3 und 4, sowie aus unserem Gebrauchsmuster 299 07 916 bekannt. Bei der bekannten Vorrichtung ist das Hubglied mit seinem unteren Ende über eine Achse gelenkig mit dem oberen Ende des Schubgliedes verbunden, das von einem ersten Kniehebelglied eines zweigliedrigen Kniehebelantriebs gebildet wird und mit seinem unteren Ende mit dem zweiten Kniehebelglied an einer Stelle gelenkig verbunden ist, die zwischen einem am Gehäuse angelenkten Ende des zweiten Kniehebelgliedes und dessen anderen, freien Ende liegt, wobei das zweite Kniehebelglied im Bereich zwischen seinem anderen freien Ende und der Anlenkstelle des ersten Kniehebelgliedes als Handhabe ausgebildet ist. Das Hubglied ist ferner über die das Hubglied mit dem Schubglied gelenkig verbindenden Achse an die Kolbenstange eines axial beweglichen Kolbens einer Kolbenund Zylindereinheit angeschlossen, deren Zylinder an dem Gehäuse angelenkt und damit axial unbeweglich ist. Die Kolbenund Zylindereinheit der bekannten Vorrichtung ist eine Gasfeder, die dazu dient, den für das Anheben des Daches erforderlichen manuellen Kraftaufwand zu verringern und damit die Betätigung des Kniehebelantriebs zu erleichtern. In der abgesenkten Stellung des Daches erstrecken sich die beiden Kniehebelglieder und das Hubglied mehr oder weniger genau in die gleiche axiale Richtung, wobei die Anlenkstelle des zweiten Kniehebelgliedes am Gehäuse oberhalb der Anlenkstelle des ersten Kniehebelgliedes am zweiten Kniehebelglied ist. Zum Anheben des Daches wird das zweite Kniehebelglied an seiner Handhabe ergriffen und um 180° nach oben geklappt, wobei das erste Kniehebelglied aufwärts bewegt wird und dabei gleichzeitig eine Schwenkbewegung ausführt. Die Aufwärtsbewegung des ersten Kniehebelgliedes wird auf das Hubglied übertragen, das sich seinerseits nach oben bewegt, wobei der Kolben der Gasfeder gleichzeitig ausfährt. In der angehobenen Stellung des Daches befindet sich die Kniegelenkachse bezüglich der anderen Anlenkachsen der Kniehebelglieder in einer Übertotpunktlage, was zur Folge hat, daß durch die von dem Hubglied in die Kniehebel eingeleitete Last die Kniehebel in ihrer hochgeklappten Stellung fixiert sind. An dem zweiten Kniehebel ist eine Rasteinrichtung vorgesehen, die in der hochgeklappten Stellung des zweiten Kniehebels mit einem Gegenhalter am Gehäuse zusammenwirkt, um den zweiten Kniehebel in der hochgeklappten Stellung zusätzlich zu sichern. Die Rasteinrichtung wirkt auch in der abgeklappten Stellung des zweiten Kniehebels mit einem weiteren Gegenhalter am Gehäuse zusammen, um ihn auch in der abgeklappten Stellung zu sichern. Mit der bekannten Vorrichtung kann das Dach somit nur in der vollständig angehobenen Lage und in der vollständig abgesenkten Lage fixiert werden. Eine Fixierung des Daches zwischen den beiden Extremlagen kann mit der bekannten Vorrichtung nicht erreicht werden. Da zum Anheben und Absenken des Daches das zweite Kniehebelglied um 180° verschwenkt werden muß, benötigt man für eine ungehinderte Bewegung des zweiten Kniehebelgliedes einen seitlichen Freiraum, der in waagerechter Richtung größer als die Länge des zweiten Kniehebelgliedes ist. In manchen Situationen, in denen das Fahrzeug zu be- oder entladen ist und dabei das Dach anzuheben oder abzusenken ist, steht ein solcher großer seitlicher Freiraum nicht oder nicht ohne Weiteres zur Verfügung. Ferner ist es aus ergonomischen Gründen ungünstig, das zweite Kniehebelglied oberhalb seiner waagrechten Lage unter Last verschwenken zu müssen.

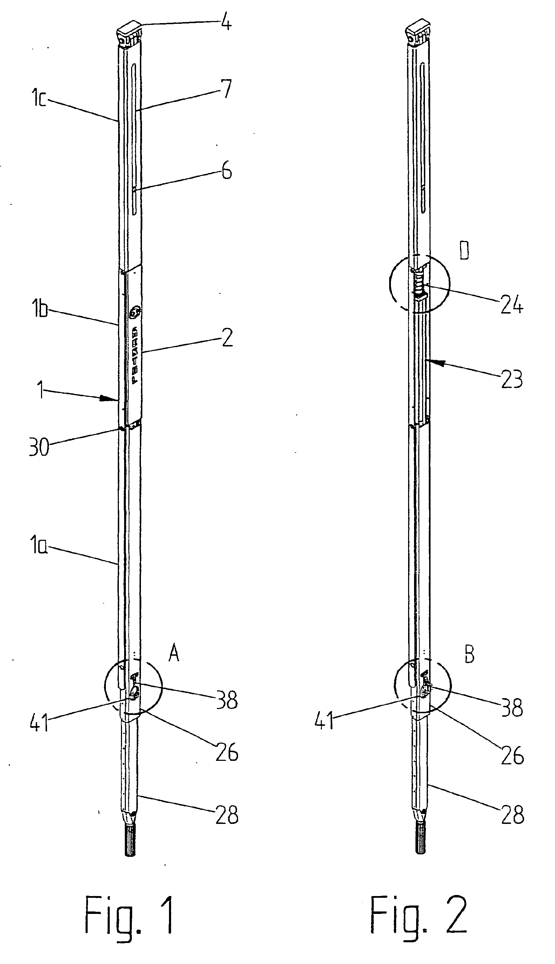

Bei der in den Figuren 1 und 2 dargestellten Ausführungsform der aus dem Gebrauchsmuster 298 08 741 bekannten Vorrichtung ist eine stufenlose Verstellung des anheb- und absenkbaren Daches möglich, denn das untere Ende des Hubgliedes ist drehfest mit einer Gewindestange verbunden, auf der eine Mutter angeordnet ist, die an einem die Gewindestange umgebenden Rohr befestigt ist, das drehbar auf einer Stütze gelagert ist, die an der Runge angeschweißt wird. Die Stütze weist ein Loch auf, durch das ein Ansatz am Rohr hindurchragt. Dieser Ansatz des Rohres ist über ein Kardangelenk mit einer Handkurbel verbunden. Durch Drehen der Handkurbel wird das Rohr und damit die Mutter gedreht, was zur Folge hat, daß die Gewindestange und damit das Hubglied auf- oder abwärts bewegt werden. Bei der Betätigung des Kurbelantriebs muß die Bedienungsperson die Kurbel mit einer Hand drehen und mit der anderen Hand führen. Wenn das Dach zwischen beiden Extremlagen zu bewegen ist, kann die Betätigung des Kurbelantriebs belastend für die Bedienungsperson sein, weil der zum Drehen und Führen der Kurbel erforderliche Kraftaufwand mit zunehmender Dauer stärker spürbar ist. Diese Auswirkungen der Betätigung des Kurbelantriebs sind nicht unerheblich, da die Bedienungsperson häufig mehrere Vorrichtungen nacheinander bedienen muß, um das Dach an entsprechend vielen Stellen anzuheben, so daß der Be- und Entladevorgang überhaupt durchführbar oder zumindest erleichtert ist.

Die Aufgabe der Erfindung besteht darin, die gattungsgemäße Vorrichtung so weiterzubilden, daß die Fixierung des Daches in beliebigen Zwischenstellungen möglich ist, das Anheben und Absenken des Daches ohne Rücksicht auf die Hubhöhe kraft-, zeit- und platzsparend durchführbar ist und die Vorrichtung weiterhin einfach im Aufbau, preiswert in der Herstellung und zuverlässig im Betrieb ist. Außerdem soll sich die Vorrichtung weiterhin auch zur Nachrüstung bei bereits vorhandenen Nutzfahrzeugaufbauten eignen.

Die Aufgabe der Erfindung wird dadurch gelöst, daß der Kolben den Zylinder in zwei mit Hydraulikflüssigkeit gefüllte Kammern unterteilt, die über einen Strömungsweg miteinander verbunden sind, in dem ein Absperrventil angeordnet ist, das zwischen einer Offenstellung, in der sich der bewegliche Teil auf- oder abwärts bewegen kann, und einer Geschlossenstellung, in der der bewegliche Teil gegen eine Aufwärts- oder Abwärtsbewegung blockiert ist, umschaltbar ist, und die Kupplung eine Abwärtsbewegung des Schubgliedes relativ zu dem in einer angehobenen Lage sich befindenden Hubglied zuläßt.

Ein Vorteil der erfindungsgemäßen Vorrichtung besteht darin, daß die Bedienungsperson den Kniehebelantrieb nur zum Anheben des Daches betätigen muß, während sie zum Absenken des Daches nur das Absperrventil umschalten und damit keine nennenswerte Kraft aufwenden muß. Außerdem kann das Dach sehr zügig abgesenkt werden, weil das Absenken des Daches automatisch erfolgt, wenn das Absperrventil einmal geöffnet ist.

Vorteilhafte Weiterbildungen der erfindungsgemäßen Vorrichtung sind Gegenstand der Unteransprüche.

Ein Ausführungsbeispiel der Erfindung ist in den Zeichnungen dargestellt und wird im folgenden näher beschrieben. Es zeigt:
- Fig. 1: eine perspektivische Darstellung einer Vorrichtung zum Anheben und Absenken eines über Rungen abgestützten Daches eines Nutzfahrzeugaufbaus, wobei die Runge, an dem das Gehäuse der Vorrichtung zu befestigen ist, und das Dach des Nutzfahrzeugaufbaus nicht gezeigt sind und wobei das Hubglied in der abgesenkten Stellung ist und die Kniehebelglieder des Kniehebelantriebs in der eingeklappten Stellung sind;
- Fig. 2: eine ähnliche Darstellung wie in Fig. 1, wobei jedoch eine in einem mittleren Abschnitt des Gehäuses vorgesehene Abdeckplatte des Gehäuses entfernt ist, um die Kupplung zwischen dem Schubglied und dem Hubglied sichtbar zu machen, und wobei der Betätigungshebel für das Absperrventil in einer gegenüber der in Fig. 1 gezeigten Stellung herausgeschwenkten Stellung ist, in der das Absperrventil in seiner Offenstellung ist;
- Fig. 3: eine ähnliche Darstellung wie in Fig. 1, wobei jedoch das Hubglied in einer angehobenen Stellung ist und die Kniehebelglieder in der ausgeklappten Stellung sind;
- Fig. 4: eine ähnliche Darstellung wie in Fig. 3, wobei jedoch das Gehäuse weggelassen ist, um das Hubglied und das Schubglied und die Kupplung zwischen ihnen sichtbar zu machen;
- Fig. 5: die Kolben- und Zylindereinheit im Längsschnitt;
- Fig. 6: die in Fig. 1 eingekreiste Einzelheit A in vergrößerter Darstellung;
- Fig. 7: die in Fig. 2 eingekreiste Einzelheit B in vergrößerter Darstellung;
- Fig. 8: eine Schnittdarstellung der in Fig. 6 dargestellten Einzelheit A, wobei der Betätigungshebel für das Absperrventil in der eingeklappten Stellung ist, in der das Absperrventil in der Geschlossenstellung ist;
- Fig. 9: eine Schnittdarstellung der in Fig. 7 dargestellten Einzelheit B, wobei der Betätigungshebel für das Absperrventil in der herausgeschwenkten Stellung ist, in der das Absperrventil in der Offenstellung ist;
- Fig. 10: die in Fig. 3 eingekreiste Einzelheit C in vergrößerter Darstellung;
- Fig. 11: die in Fig. 6 dargestellte Einzelheit A, wobei jedoch das die Handhabe aufweisende Kniehebelglied weggelassen ist, um die darunterliegenden Bauteile sichtbar zu machen;
- Fig. 12: die in Fig. 2 eingekreiste Einzelheit D in vergrößerter Darstellung;
- Fig. 13: eine ähnliche Darstellung wie in Fig. 12, wobei jedoch das Schubglied und das Hubglied in einer gegenüber der in Fig. 12 gezeigten Stellung angehobenen Stellung sind;
- Fig. 14: die in Fig. 4 eingekreiste Einzelheit E in vergrößerter Darstellung;
- Fig. 15: die in Fig. 4 eingekreiste Einzelheit F in vergrößerter Darstellung;
- Fig. 16: eine ähnliche Darstellung wie in Fig. 12, jedoch von einem anderen Blickwinkel und mit einer Modifikation insbesondere des Schubgliedes;
- Fig. 17: einen Schnitt durch die Vorrichtung im Bereich der Kupplung, wobei das modifizierte Schubglied und die Lochscheibe in ihrer unteren Ausgangsstellung gezeigt sind;
- Fig. 18: eine ähnliche Darstellung wie in Fig. 17, jedoch nachdem die Lochscheibe von der modifizierten Schubstange bis zu ihrer Verkantung einseitig angehoben worden ist;
- Fig. 19: eine ähnliche Darstellung wie in Fig. 18, wobei jedoch die Lochscheibe von dem modifizierten Schubglied aus der Verkantung gelöst und relativ zu dem Hubglied abwärts bewegt wird; und
- Fig. 20: zwei perspektivische Darstellungen des oberen Endabschnitts des modifizierten Schubgliedes aus verschiedenen Blickwinkeln.

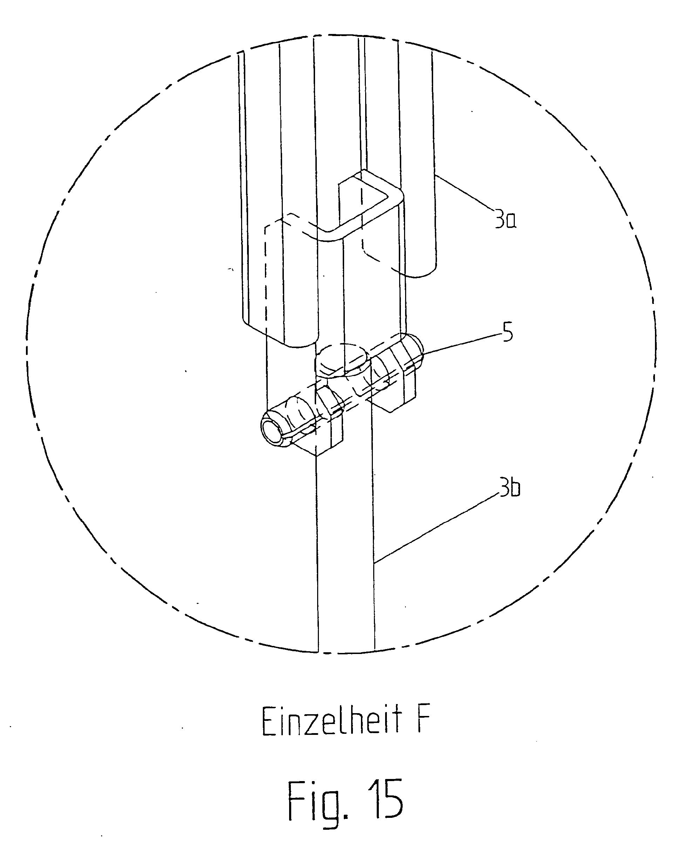

Wie in den Zeichnungen gezeigt, weist eine Vorrichtung zum Anheben und Absenken eines über Rungen abgestützten Daches eines Nutzfahrzeugaufbaus ein an einer nicht dargestellten Runge durch Schweißen befestigbares Gehäuse 1 auf, das in einem unteren Abschnitt 1a und einem mittleren Abschnitt 1b einen U-förmigen Querschnitt hat, und in einem oberen Abschnitt 1c einen kastenförmigen Querschnitt hat. Im mittleren Abschnitt 1b ist das Gehäuse 1 durch eine an ihm befestigten Abdeckplatte 2 geschlossen. Die Abdeckplatte 2 eignet sich als Träger eines Firmenlogos und verdeckt die darunterliegenden beweglichen Bauteile, so daß diese für die Bedienungsperson nicht erreichbar sind und die Bedienungsperson nicht an der Hand oder den Fingern verletzen könnten. Der obere Abschnitt 1c des Gehäuses 1 bildet einen Führungskanal, in dem ein Hubglied 3 in Aufwärts- und Abwärtsrichtung verschiebbar aufgenommen ist. An seinem oberen Ende ist das Hubglied 3 gelenkig mit einem Lagerbock 4 verbunden, der in der vollständig abgesenkten Stellung des Hubgliedes 3, wie sie in den Figuren 1 und 2 gezeigt ist, unmittelbar oberhalb des oberen Endes des Gehäuses 1 angeordnet ist. Der Lagerbock 4 ist an dem nicht dargestellten Dach befestigbar und stellt somit das Verbindungsglied zwischen dem Hubglied 3 und dem anheb- und absenkbaren Dach dar. Ein oberer Abschnitt 3a des Hubgliedes 3 ist mit einem unteren Abschnitt 3b des Hubgliedes 3 über einen Verbindungsstift 5 verbunden, wie insbesondere in Fig. 4 und Fig. 15 ersichtlich ist. Der untere Abschnitt 3b des Hubgliedes 3 ist als Rohr mit rundem Querschnitt ausgebildet. Der obere Abschnitt 3a des Hubgliedes 3 weist einen Zapfen 6 auf, der in einen Führungsschlitz 7 in der Wand des oberen Abschnittes 1c des Gehäuses 1 ragt und sich bei einer Aufwärts- oder Abwärtsbewegung des Hubgliedes 1 in dem Führungsschlitz 7 entlang bewegt. Der Zapfen 6 und der Führungsschlitz 7 dienen als Hubbegrenzung für das Hubglied 3.

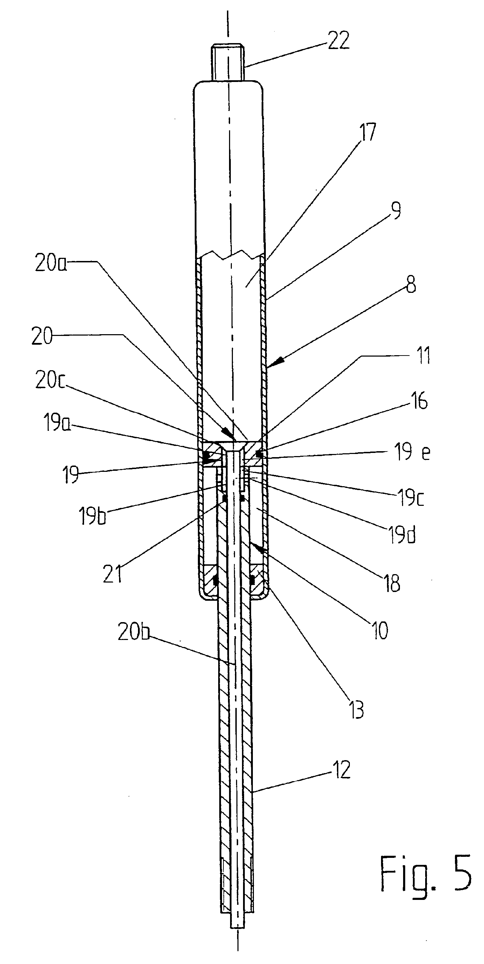

Im Gehäuse 1 befindet sich ferner eine Kolben- und Zylindereinheit 8, die in den Figuren 3 und 4 teilweise sichtbar und in Fig. 5 in ganzer Länge dargestellt ist. Die Kolben- und Zylindereinheit 8 weist einen Zylinder 9 und einen Kolben 10 auf, der seinerseits einen im Innern des Zylinders 9 angeordneten Kolbenboden 11 und eine daran befestigte Kolbenstange 12 aufweist, die aus dem Innern des Zylinders 9 durch einen Zylinderboden 13 nach unten herausgeführt ist. An ihrem unteren Ende ist die Kolbenstange 12 mittels eines im wesentlichen zylindrischen Verbindungsstücks 14 und eines Bolzens mit Sicherungsclip 15 am unteren Ende des Gehäuses 1 befestigt. Der Zylinder 9 ist gegenüber dem feststehenden Kolben 10 axial verschiebbar. Der mittels einer Dichtung 16 gegen die Innenwand des Zylinders 9 abgedichtete Kolbenboden 11 unterteilt den Innenraum des Zylinders 9 in eine obere Kammer 17 und eine untere Kammer 18, die mit der oberen Kammer 17 über einen Strömungsweg 19 in Verbindung steht, in dem ein steuerbares Rückschlagventil 20 zum Öffnen und Schließen des Strömungsweges 19 angeordnet ist. Der Strömungsweg 19 weist einen den Kolbenboden 11 durchdringenden ersten Strömungskanal 19a und einen an den ersten Strömungskanal 19a sich unmittelbar anschließenden, in der Kolbenstange 12 gebildeten, zweiten Strömungskanal 19b auf, der in die untere Kammer 18 mündet. Das Rückschlagventil 20 hat einen relativ zum Kolbenboden 11 bewegbaren konischen Ventilkörper 20a, einen an dem Ventilkörper 20a befestigten Ventilschaft 20b und einen konisch geformten Ventilsitz 20c, der im Kolbenboden 11 gebildet ist und einen oberen Endabschnitt des durch den Kolbenboden 11 gehenden ersten Strömungskanals 19a begrenzt. In der Geschlossenstellung des Rückschlagventils 20 liegt der Ventilkörper 20a an dem Ventilsitz 20b an, und in der Offenstellung des Rückschlagventils 20 ist der Ventilkörper 20a von dem Ventilsitz 20b abgehoben.

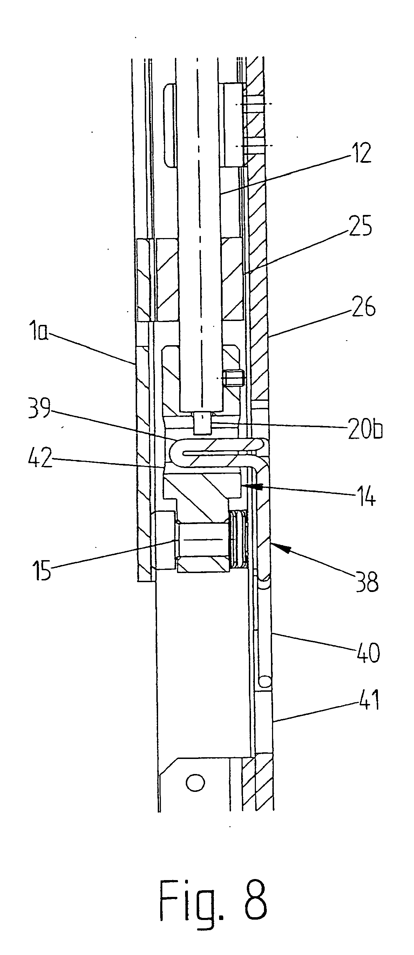

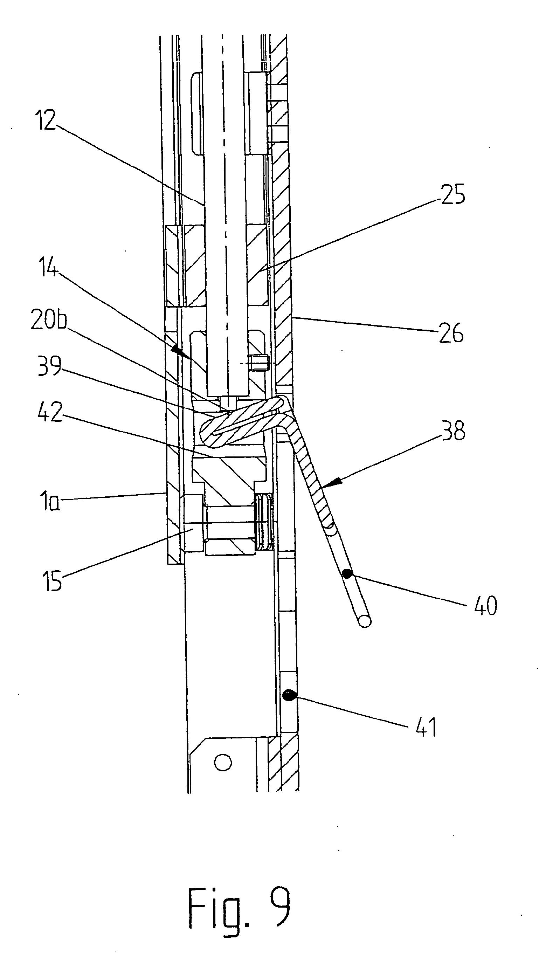

Die Kolbenstange 12 ist durchgehend hohl ausgeführt und der Ventilschaft 20b verläuft koaxial in dem Hohlraum der Kolbenstange 12 und ist darin relativ zu der Kolbenstange 12 axial verschieblich. Eine Dichtung 21 dichtet den Ventilschaft 20b gegen die Kolbenstange 12 ab. Der zweite Strömungskanal 19b in der Kolbenstange 12 führt durch einen erweiterten Endabschnitt des Hohlraumes der Kolbenstange 12 und umfaßt einen Ringraum 19c, der um den Ventilschaft 20b herum angeordnet ist und mit radial verlaufenden Verbindungskanälen 19d verbunden ist, die sich durch die Wand der Kolbenstange 12 erstrecken und an deren Außenfläche in einem Abschnitt enden, der an die untere Kammer 18 des Zylinders 9 grenzt. Auch der erste Strömungskanal 19a im Kolbenboden 11 umfaßt einen Ringraum 19e, der um den Ventilschaft 20b herum angeordnet ist und in der Offenstellung des Rückschlagventils 20 über den zwischen dem Ventilkörper 20c und dem Ventilsitz 20b gebildeten Ringspalt mit der oberen Kammer 17 des Zylinders 9 verbunden ist. Das untere Ende des Ventilschaftes 20b überragt das untere Ende der Kolbenstange 12 in der Geschlossenstellung des Rückschlagventils 20 um einen Betrag, der größer als der Ventilhub ist, den der Ventilkörper 20a bei seiner Bewegung aus der Geschlossenstellung in die Offenstellung des Ventils zurücklegt, wie insbesondere aus den Figuren 8 und 9 ersichtlich ist.

Beide Kammern 17 und 18 des Zylinders 9 sowie die Strömungskanäle 19a und 19b sind vollständig mit einer nicht unter Druck stehenden Hydraulikflüssigkeit gefüllt.

Am oberen Ende des Zylinders 9 befindet sich ein nach oben ragender Gewindezapfen 22, der in Eingriff ist mit einem im unteren Ende des Hubgliedes 3 gebildeten Innengewinde, derart, daß das Hubglied 3 und der Zylinder 9 fest miteinander verbunden und infolgedessen gemeinsam aufwärts und abwärts bewegbar sind. Eine Aufwärtsbewegung des Zylinders 9 relativ zu dem Kolben 10 hat zur Folge, daß die in der unteren Kammer 18 und den Strömungskanälen 19a und 19b sich befindende Hydraulikflüssigkeit das Rückschlagventil 20 in die Offenstellung drückt und in die obere Kammer 17 entweicht. Wird jedoch über das Hubglied 3 eine nach unten gerichtete Kraft auf den Zylinder 9 ausgeübt, drückt die in der oberen Kammer 17 sich befindende Hydraulikflüssigkeit das Rückschlagventil 20 in seine Geschlossenstellung mit der Folge, daß keine Hydraulikflüssigkeit von der oberen Kammer 17 in die untere Kammer 18 zurückströmen kann und eine Abwärtsbewegung des Zylinders 9 relativ zu der Kolbenstange 12 verhindert ist. Erst wenn das Rückschlagventil 20 durch Anheben der Ventilschaftes 20b und damit des Ventilkörpers 20a in die Offenstellung bewegt wird, bewirkt die auf den Zylinder 9 ausgeübte, nach unten gerichtete Kraft, daß Hydraulikflüssigkeit aus der oberen Kammer 17 über das geöffnete Ventil 20 in die untere Kammer 18 strömt.

Ein Schubglied 23, das einen U-förmigen Querschnitt hat, ist im mittleren und unteren Gehäuseabschnitt 1b bzw. 1a untergebracht. Das Schubglied 23 ist an seinem oberen Ende über eine unten näher beschriebene Kupplung 24 kraftschlüssig mit dem unteren Abschnitt 3b des Hubgliedes 3 verbindbar. Im Bereich zwischen dem oberen Ende des Schubgliedes und dem oberen Ende des Zylinders 9 wird der untere Abschnitt 3b des Hubgliedes 3 von dem Schubglied 23 umgriffen. Das untere Ende des Schubgliedes 23 ist über eine Achse 29 mit einem Gleitstück 25 fest verbunden, das auf der Kolbenstange 12 in deren Längsrichtung verschiebbar geführt ist. Im Bereich zwischen dem oberen Ende des Zylinders 9 und dem Gleitstück 25 umgreift das Schubglied 23 den Zylinder 9 und die Kolbenstange 12.

Ein Kniehebelantrieb weist zwei Kniehebelglieder 26 und 27 auf, von denen das eine Kniehebelglied 26 mit seinem oberen Ende an einer Anlenkstelle 30 gelenkig an das Gehäuse 1 angeschlossen ist und von denen das andere Kniehebelglied 27 mit seinem unteren Ende über die Achse 29 gelenkig mit dem Gleitstück 25 und damit gelenkig mit dem unteren Ende des Schubgliedes 23 verbunden ist. Das obere Ende des Kniehebelgliedes 27 ist mit dem Kniehebel 26 an einer Anlenkstelle 31 gelenkig verbunden, die zwischen dem an das Gehäuse 1 gelenkig angeschlossene obere Ende des Kniehebelgliedes 26 und dessen unteren freien Ende liegt. Das Kniehebelglied 26 ist im Bereich zwischen der Anlenkstelle 31 des Kniehebelgliedes 27 und seinem unteren freien Ende als Handhabe 28 ausgebildet.

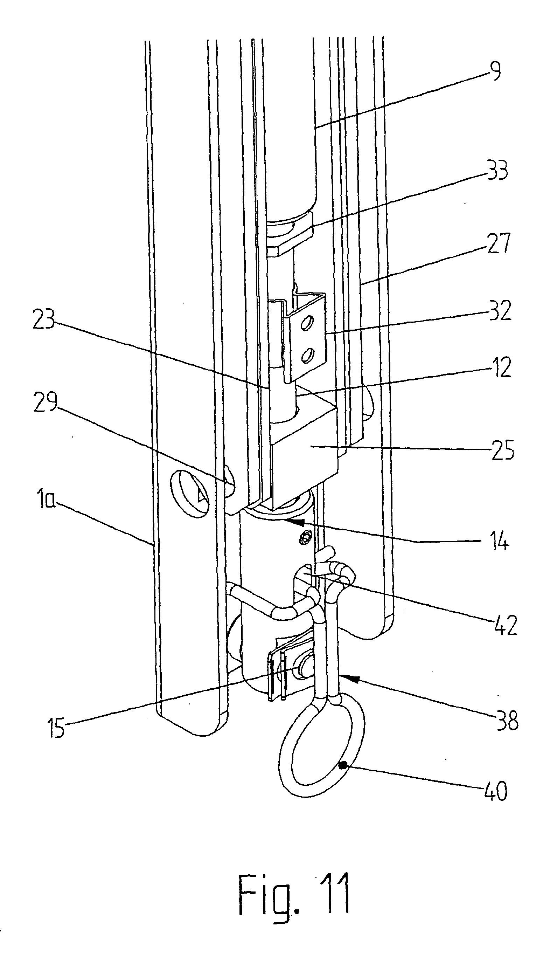

Wie aus den Figuren 1 und 2 ersichtlich ist, wird in der eingeklappten Stellung der Kniehebelglieder 26 und 27 das Kniehebelglied 26 über einen größeren Teil seiner Länge von dem unteren Gehäuseabschnitt 1a seitlich umgriffen und liegt das Kniehebelglied 27 verdeckt zwischen dem Kniehebelglied 26 und dem unteren Gehäuseabschnitt 1a, während die Handhabe 28 über das untere Ende des Gehäuseabschnittes 1a nach unten hinausragt. Aus der eingeklappten Stellung sind die Kniehebel 26 und 27 in die in den Figuren 3 und 4 gezeigte ausgeklappte Stellung bewegbar, indem die Handhabe 28 ergriffen und das Kniehebelglied 26 in Richtung des in Fig. 3 gezeigten Pfeiles geschwenkt wird, wobei im dargestellten Beispiel die Schwenkbewegung des Kniehebelgliedes 26 von der eingeklappten Stellung in die ausgeklappte Stellung etwa 30° beträgt. In der eingeklappten Stellung der Kniehebelglieder 26 und 27 liegt die Anlenkstelle 31 näher am Boden des Gehäuseabschnittes 1a als die Anlenkstelle 30 und die Achse 29. Dadurch wird eine Übertotpunktlage der Kniehebelglieder 26, 27 erzeugt, die die Kniehebelglieder 26, 27 in der eingeklappten Stellung hält und ein unbeabsichtigtes Ausklappen der Kniehebelglieder verhindert. Eine zangenförmig gebogene Blattfeder 32 ist an dem Kniehebelglied 26 befestigt und umgreift die Kolbenstange 12 in der eingeklappten Stellung der Kniehebelglieder 26 und 27 kraft- und formschlüssig, wie in Fig. 11 ersichtlich ist. Im eingeklappten Zustand der Kniehebelglieder 26 und 27 wird somit durch das Zusammenwirken der Blattfeder 32 und der Kolbenstange 12 eine zusätzliche Sicherung gegen unbeabsichtigtes Ausklappen der Kniehebelglieder 26 und 27 geschaffen. Diese Sicherung wirkt zusätzlich zu der durch die Übertotpunktlage der Kniehebelglieder 26 und 27 erzeugten Sicherung gegen unbeabsichtigtes Ausklappen der Kniehebelglieder 26 und 27.

Eine am Gehäuse 1a befestigte Lagerplatte 33 weist ein Loch auf, durch das sich die Kolbenstange 12 mit Spiel erstreckt, derart, daß die Kolbenstange 12 relativ zu der Lagerplatte 33 in Längsrichtung ohne nennenswerten Reibungswiderstand bewegbar ist. Die Lagerplatte 33 verhindert ein Ausknicken der Kolbenstange 12.

Ein Bügel 34 ist in der Nähe des oberen Endes des Schubgliedes 23 am Gehäuseabschnitt 1b befestigt. Der Bügel 34 umgreift das Schubglied 23 derart, daß es bei seiner Auf- und Abwärtsbewegung von dem Bügel 34 geführt wird.

Die Kupplung 24 zum kraftschlüssigen Verbinden des Schubgliedes 23 und des Hubgliedes 3 umfaßt eine Lochscheibe 35, die ein zentrales Loch aufweist, durch das sich der untere Abschnitt 3b des Hubgliedes 3 erstreckt. Die Lochscheibe 35 ist auf dem unteren Abschnitt 3b des Hubgliedes 3 oberhalb des oberen Endes des Schubgliedes 23 angeordnet. Im dargestellten Beispiel besteht die Lochscheibe 35 aus zwei aufeinanderliegenden Tellerfedern, die leicht gewölbt sind, wobei ihre konkaven Seiten nach unten weisen, um den unten beschriebenen Verkantungseffekt zu erhöhen. Die Lochscheibe 35 könnte auch aus einem einzelnen oder aus mehr als zwei Scheibenelementen bestehen, die flach oder, wie im Beispiel, gewölbt sein könnten. Das obere Ende des Schubgliedes 23 ist abgeschrägt. Das Loch der Lochscheibe 35 ist so bemessen, daß, wenn die Lochscheibe 35 in einer anähernd waagerechten Lage ist, in der die Längsachse des unteren Abschnittes 3b des Hubgliedes 3 senkrecht durch die Ebene der Lochscheibe 35 verläuft, die Lochscheibe 35 weitgehend reibungsfrei auf dem unteren Abschnitt 3b des Hubgliedes 3 verschiebbar ist und daß die Lochscheibe 35 in eine Schräglage kippbar ist, in der sie sich parallel oder annähernd parallel zu dem abgeschrägten oberen Ende des Schubgliedes 23 erstreckt und der Rand des Loches der Scheibe 35 partiell an der Oberfläche des unteren Abschnittes 3b des Hubgliedes 3 anliegt. Den Übergang zwischen der zur Ebene der Scheibe 35 parallelen Oberfläche und dem Rand ihres Loches bilden eckige Kanten, die gehärtet sind.

Die Kupplung 24 weist ferner einen als Widerlager dienender Stützbügel 36 auf, der im Abstand oberhalb des Bügels 34 angeordnet und am mittleren Gehäuseabschnitt 1b befestigt ist. Der Stützbügel 36 weist eine Aussparung 36a auf, durch die der untere Abschnitt 3b des Hubgliedes 3 mit Spiel hindurchgeführt ist, derart, daß der untere Abschnitt 3b relativ zu dem Stützbügel 36 verschiebbar ist. Der Stützbügel 36 hat somit auch eine Führungsfunktion für das Hubglied 3.

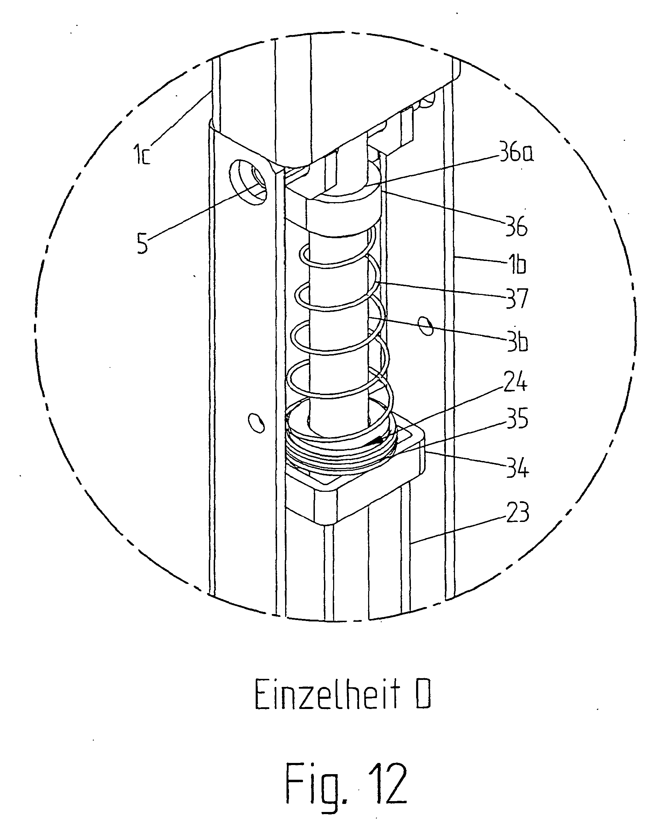

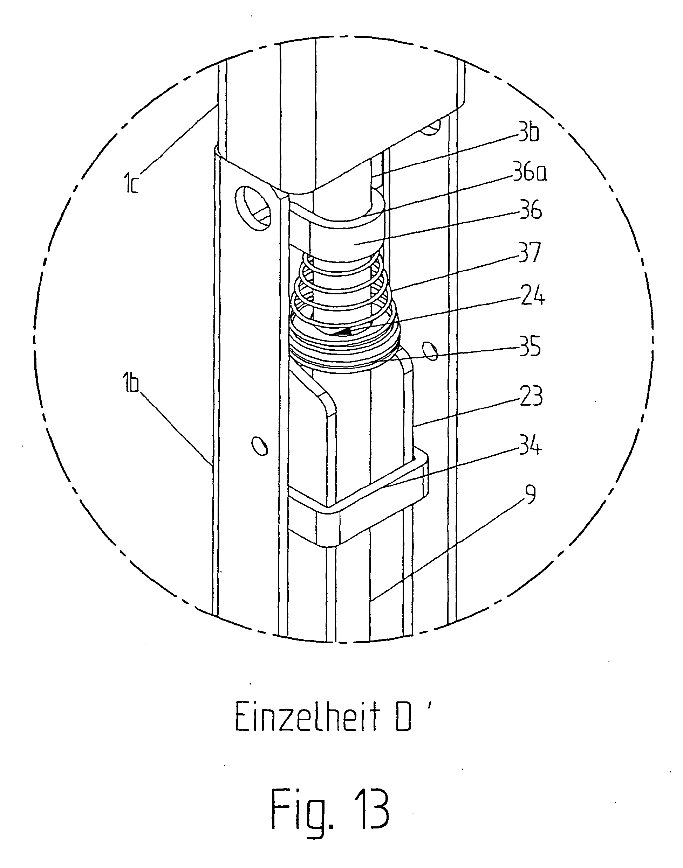

Ferner weist die Kupplung 24 eine konische Druckfeder 37 auf, deren Windungen um den unteren Abschnitt 3b des Hubgliedes 3 herumgeführt sind, derart, daß die Feder 37 relativ zu dem unteren Abschnitt 3b des Hubgliedes 3 zusammengedrückt werden kann und sich wieder entspannen kann. Die Druckfeder 37 hat ein oberes Ende, das auf der Unterseite des Stützbügels 36 anliegt, und ein unteres Ende, das auf der Oberseite der Lochscheibe 35 anliegt. Die Druckfeder 37 drückt die Lochscheibe 35 in Richtung auf den Bügel 34, auf dem die Lochscheibe 35 in ihrer untersten Lage waagerecht aufliegt, wie Fig. 12 zeigt. Der Bügel 34 bildet somit eine untere Hubbegrenzung für die Lochscheibe 35. Nach oben wird der Hub der Lochscheibe 35 durch das Aneinanderlegen der Windungen der Druckfeder 37 begrenzt, wie Fig. 13 verdeutlicht.

Die Kupplung 24 funktioniert derart, daß, wenn ausgehend von der in Fig. 12 gezeigten Situation das Schubglied 23 nach oben bewegt wird, die Lochscheibe 35 von dem oberen abgeschrägten Ende des Schubgliedes 23 von dem Bügel 34 abgehoben wird, wobei die Lochscheibe 35 in eine Schräglage kippt, die der Schräge des oberen abgeschrägten Endes des Schubgliedes 23 entspricht oder dieser angenähert ist. In dieser Schräglage verkrallen sich die Kanten des Lochrandes partiell in der Oberfläche des unteren Abschnittes 3b des Hubgliedes, so daß bei einer weiteren Bewegung des Schubgliedes 23 nach oben das Hubglied 3 von der zusammen mit dem Schubglied 23 sich bewegenden Lochscheibe 35 mitgenommen wird. Während sich das Schubglied 23, die Lochscheibe 35 und das Hubglied 3 gemeinsam nach oben bewegen, wird die Druckfeder 37 zunehmend zusammengedrückt. Die Aufwärtsbewegung des Schubgliedes 23, der Lochscheibe 35 und des Hubgliedes 3 setzt sich solange fort, bis die Windungen der Feder 37 sich aneinanderlegen, d.h., bis die Druckfeder 37 "auf Block" ist.

Während das Hubglied 3 in der angehobenen Lage von der Kolbenund Zylindereinheit 8 gehalten wird, wie unten näher beschrieben ist, kann das Schubglied 23 zusammen mit der Lochscheibe 35 in die Ausgangsstellung abgesenkt werden. Wird das Schubglied 23 abwärts bewegt, wird die Lochscheibe 35 von der Druckfeder 37 in eine annähernd waagerechte Lage gedrängt, in der die Kanten des Lochrandes außer Eingriff mit der Oberfläche des unteren Abschnittes 3b des Hubgliedes 3 sind, was zur Folge hat, daß sich die Lochscheibe 35 zusammen mit dem Schubglied 23 relativ zu dem Hubglied 3 nach unten bewegen. Wie bereits erwähnt, wird die Abwärtsbewegung der Lochscheibe 35 dadurch begrenzt, daß sie auf der Oberseite des Bügels 34 aufliegt.

Eine Betätigungseinrichtung für das Rückschlagventil 20 weist einen Betätigungshebel 38 auf, der an dem Kniehebelglied 26 schwenkbar gelagert ist. Der Betätigungshebel 38 hat einen Betätigungsarm 39 und einen Griffarm 40, dessen freies Ende als Ring ausgebildet ist. Der Griffarm 40 liegt im eingeklappten Zustand des Betätigungshebels 38 in einer Öffnung 41, die in der Wand des Kniehebelgliedes 26 gebildet ist.

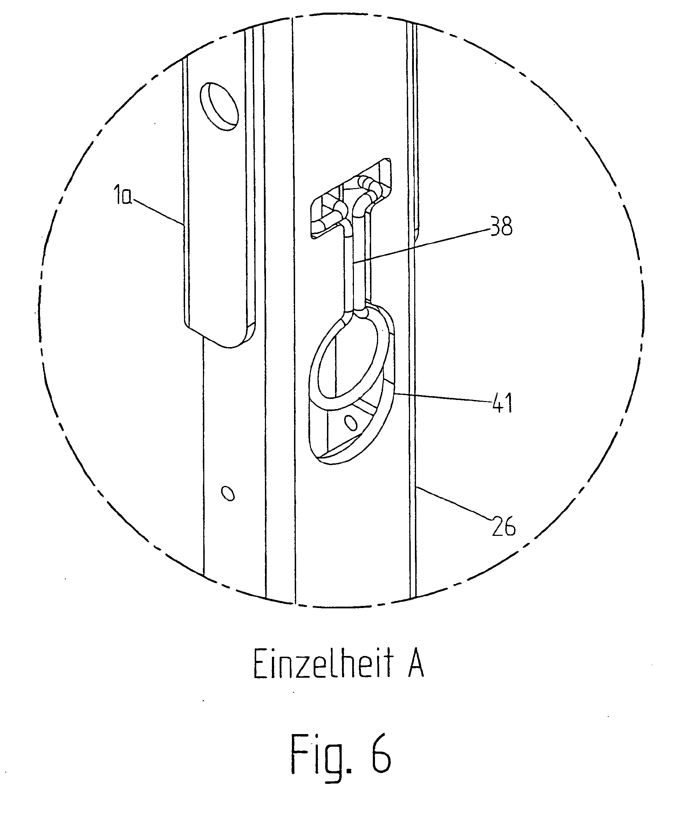

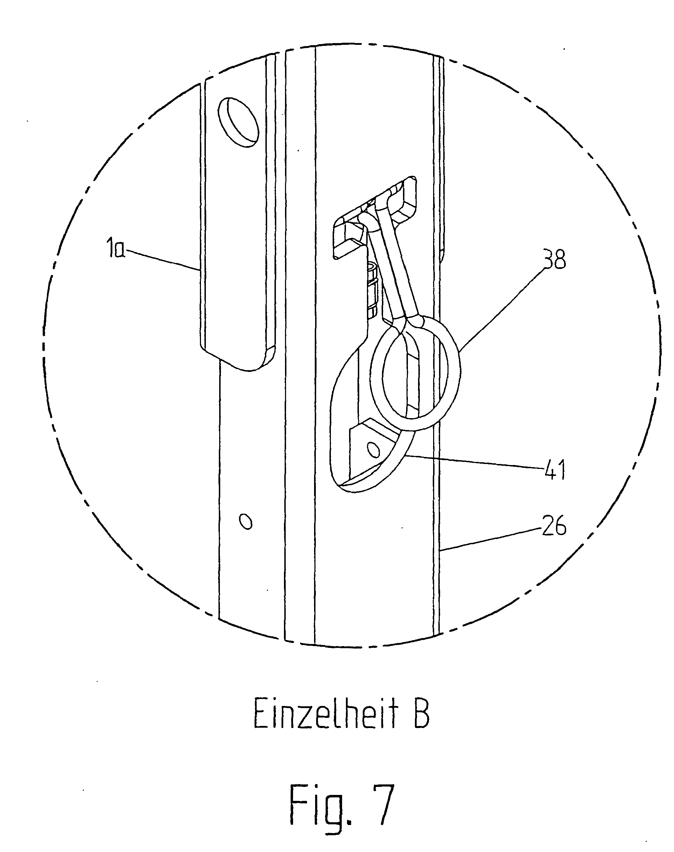

Der Betätigungshebel 38 ist aus der in Fig. 1 bzw. 6 gezeigten eingeklappten Stellung in die in Fig. 2 bzw. 7 gezeigte, ausgeklappte Stellung schwenkbar, indem der Ring des Griffarmes 40 mit dem Finger ergriffen und der Griffarm 40 herausgeschwenkt wird. Der Betätigungsarm 39 des Betätigungshebels 38 ragt im eingeklappten Zustand des Kniehebelgliedes 26 in ein Loch 42 in dem Verbindungsstück 14, wobei sich der Betätigungsarm 39 unterhalb des unteren Endes des Ventilschaftes 20b erstreckt.

Wird der Betätigungshebel 38 in der eingeklappten Stellung des Kniehebelgliedes 26 aus seiner eingeklappten Stellung in seine ausgeklappte Stellung herausgeschwenkt, wird der unmittelbar unter dem unteren Ende des Ventilschaftes 20b liegende Bereich des Betätigungsarmes 39 nach oben bewegt, was zur Folge hat, daß sich dieser Bereich an das untere Ende des Ventilschaftes 20b anlegt und den Ventilschaft 20b nach oben bewegt, wie insbesondere aus den Figuren 8 und 9 ersichtlich ist. Wie bereits erwähnt, wird durch die Aufwärtsbewegung des Ventilschaftes 20b der Ventilkörper 20a von dem Ventilsitz 20c abgehoben, so daß das Ventil 20 in seiner Offenstellung ist. Beim Einklappen des Betätigungshebels 38 in seine Ausgangsstellung bewegt sich der unmittelbar unter dem unteren Ende des Ventilschaftes 20b liegende Bereich des Betätigungsarmes 39 nach unten, was zur Folge hat, daß sich der Ventilschaft 20b wieder abwärts bewegt. Der Ventilschaft 20b bewegt sich solange abwärts, bis der Ventilkörper 20a wieder an dem Ventilsitz 20c anliegt und damit das Ventil 20 in der Geschlossenstellung ist.

Der Betätigungshebel 38 ist, wie erwähnt, drehbar an dem Kniehebelglied 26 gelagert. Wird daher das Kniehebelglied 26 aus seiner eingeklappten Stellung in die ausgeklappte Stellung geschwenkt, bewegt sich der Betätigungshebel 38 zusammen mit dem Kniehebelglied 26 in die ausgeklappte Stellung des Kniehebelgliedes 26, wie Fig. 3 zeigt. In der ausgeklappten Stellung des Kniehebelgliedes 26 ist daher der Betätigungshebel 38 außer Eingriff mit dem Ventilschaft 20b, der infolgedessen in der ausgeklappten Stellung des Kniehebelgliedes 26 nicht mittels des Betätigungshebels 38 betätigt werden kann.

Aus Arbeitsschutzgründen darf das Dach nur bei eingeklapptem Kniehebelglied 26 abgesenkt werden. Um diese Forderung zu erfüllen, sind die Abmessungen des Loches 42 so klein gewählt, daß bei ausgeklapptem Kniehebelglied 26 das untere Ende des Ventilschaftes 20b nicht mit dem Finger erreicht werden kann.

Im Folgenden wird die Funktionsweise der Vorrichtung beschrieben:

Es wird angenommen, daß sich das Dach in der abgesenkten Stellung befindet und die Vorrichtung die in Fig. 1 gezeigte Ausgangsstellung einnimmt. Zum Anheben des Daches wird das Kniehebelglied 26 unter Überwindung der Übertotpunktlage der Kniehebelglieder und der Haltekraft der Blattfeder 32 herausgeschwenkt, indem die Bedienungsperson die Handhabe 28 ergreift und in Richtung des in Fig. 3 gezeigten Pfeiles bewegt. Durch die Ausklappbewegung der Kniehebelglieder 26 und 27 wird das Kniehebelglied 27 nach oben bewegt, wobei es das Gleitstück 25 und das Schubglied 23 nach oben mitnimmt. Die Aufwärtsbewegung des Schubgliedes 23 hat zur Folge, daß die Lochscheibe 35 in die Schräglage gekippt wird, in der sich die Kanten des Lochrandes partiell an der Oberfläche des unteren Abschnittes 3b des Hubgliedes 3 verkrallen. In dieser Stellung nimmt die Lochscheibe 35 das Hubglied 3 bei ihrer weiteren Bewegung nach oben mit. Das Schubglied 23 und das Hubglied 3 werden bei Fortsetzung der Ausklappbewegung des Kniehebelgliedes 26 gemeinsam nach oben bewegt, was zur Folge hat, daß sich das Dach anhebt. Die anfängliche Aufwärtsbewegung des Schubgliedes 23 und des Hubgliedes 3 ist zu Ende, wenn die Druckfeder 37 auf Block geht. Der von der Lochscheibe 35 zwischen ihrer Ausgangsstellung, in der sie auf dem Bügel 34 aufliegt, und ihrer Endstellung, in der die Druckfeder 37 auf Block ist, zurückgelegte Hub beträgt im Beispiel etwa 40 mm.

Da das Hubglied 3 fest mit dem Zylinder 9 der Kolben- und Zylindereinheit 8 verbunden ist, wird bei einer Aufwärtsbewegung des Hubgliedes 3 der Zylinder 9 relativ zu der am Gehäuse 1 befestigten Kolbenstange 12 zusammen mit dem Hubglied 3 nach oben bewegt. Dabei strömt Hydraulikflüssigkeit von der unteren Kammer 18 in die obere Kammer 17 über das von der Hydraulikflüssigkeit in der Kammer 18 in die Offenstellung gedrängte Rückschlagventil 20. Endet die Aufwärtsbewegung des Zylinders 9, bewegt sich das Rückschlagventil 20 in seine Geschlossenstellung, wodurch ein Zurückströmen von Hydraulikflüssigkeit von der oberen Kammer 17 in die untere Kammer 18 verhindert wird. Das Hubglied 3 und damit das Dach werden in der angehobenen Stellung gehalten, weil das Rückschlagventil 20 ein Zurückströmen von Hydraulikflüssigkeit aus der oberen Kammer 17 in die untere Kammer 18 verhindert.

Dann wird das Kniehebelglied 26 wieder in die in Fig. 1 gezeigte Ausgangsstellung zurückgeschwenkt, was zur Folge hat, daß das Kniehebelglied 27 nach unten bewegt wird, wobei es das Gleitstück 25 und das Schubglied 23 nach unten mitnimmt. Infolge der Abwärtsbewegung des Schubgliedes 23 aus der angehobenen Stellung wird die Lochplatte 35 von der Druckfeder 37 in eine annähernd waagerechte Lage gedrängt, in der sie relativ zu dem Hubglied 3 verschiebbar ist, weil ihre Verkrallung mit dem Hubglied 3 aufgehoben ist. Dann bewegt sich die Lochscheibe 35 zusammen mit dem Schubglied 23 nach unten zurück in ihre Ausgangsstellung.

Durch mehrmaliges Ausklappen und Wiedereinklappen der Kniehebelglieder 26 und 27 wird das Hubglied 3 und damit das Dach stufenweise angehoben, bis sie ihre Endstellung erreicht haben, die durch Anlage des Zapfens 6 am oberen Ende des Führungsschlitzes 7 bestimmt wird. Im dargestellten Beispiel beträgt der Gesamthub des Hubgliedes 3 und damit des Daches etwa 400 mm.

Zum Absenken des Daches aus der angehobenen Stellung wird der Betätigungshebel 38 in der eingeklappten Stellung der Kniehebel 26 und 27 herausgeschwenkt, was zur Folge hat, daß der Betätigungsarm 39 den Ventilschaft 20b nach oben drückt. Die Aufwärtsbewegung des Ventilschaftes 20b bewirkt das Abheben des Ventilkörpers 20a von dem Ventilsitz 20c. Damit befindet sich das Ventil 20 in seiner Offenstellung. Die von dem Hubglied 3 auf den Zylinder 9 übertragene Last des Daches drückt den Zylinder 9 nach unten, wobei Hydraulikflüssigkeit von der oberen Kammer 17 über das geöffnete Ventil 20 in die untere Kammer 18 zurückströmt. Bei der Abwärtsbewegung des Hubgliedes 3 bewegt sich der untere Abschnitt 3b relativ zu der auf der Oberseite des Bügels 34 liegenden Lochscheibe 35 nach unten. Die Absenkbewegung des Daches in seine untere Endlage erfolgt durch einmaliges Öffnen des Rückschlagventiles 20. Durch eine geeignete Bemessung des zwischen dem Ventilkörper 20a und dem Ventilsitz 20c gebildeten Ringspaltes kann das Zurückströmen der Hydraulikflüssigkeit von der oberen Kammer 17 in die untere Kammer 18 so gedrosselt werden, daß das Absenken des Daches kontrolliert stattfindet.

Im eingeklappten Zustand sind die Kniehebelglieder 26 und 27 wieder durch ihre Übertotpunktlage und den Eingriff der Blattfeder 32 an der Kolbenstange 12 gegen unbeabsichtigtes Herausschwenken gesichert.

Sollte der Zylinder 9 ein Leck aufweisen, die Kanten der Lochscheibe 35 verschlissen sein oder andere Defekte vorliegen, läßt die Vorrichtung keine Dachanhebung zu. Damit werden Arbeitssicherheitsvorschriften erfüllt.

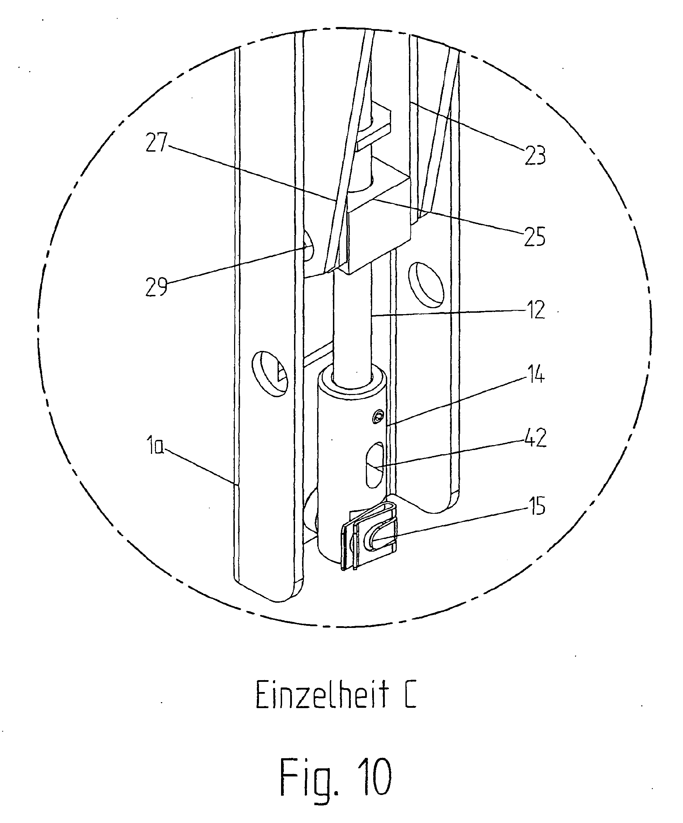

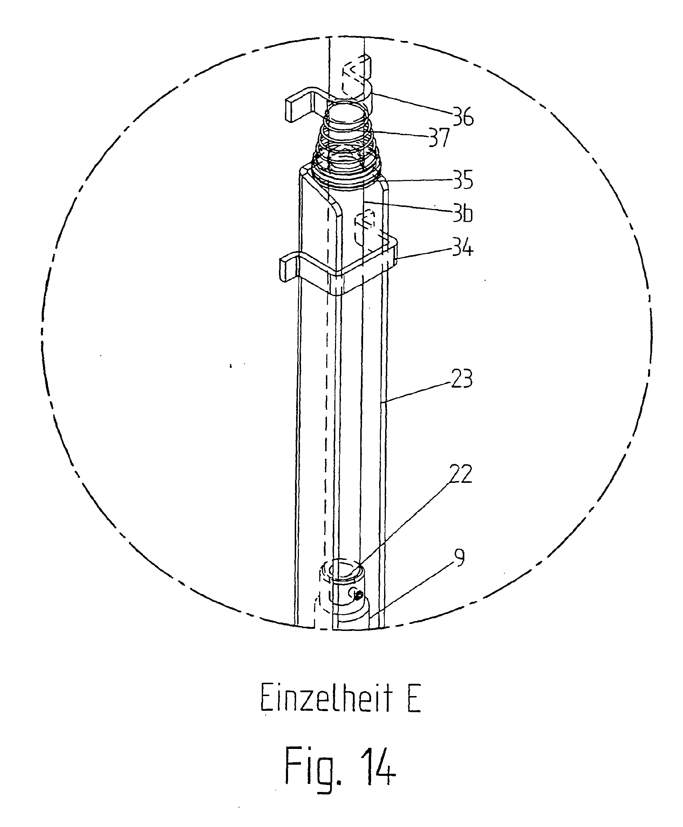

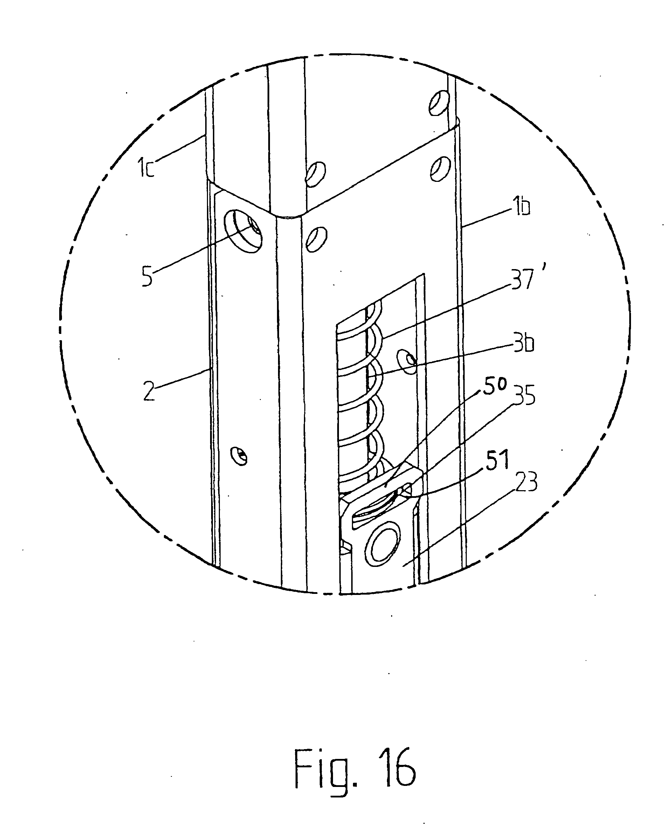

In den Figuren 16 bis 20 sind im Rahmen der Erfindung liegende Modifikationen gezeigt, die im folgenden näher beschrieben werden, wobei für diejenigen Teile, die zu den in den Figuren 1 bis 15 dargestellten Teilen gleich oder ähnlich sind, die gleichen Bezugszeichen wie in den Figuren 1 bis 15 verwendet werden.

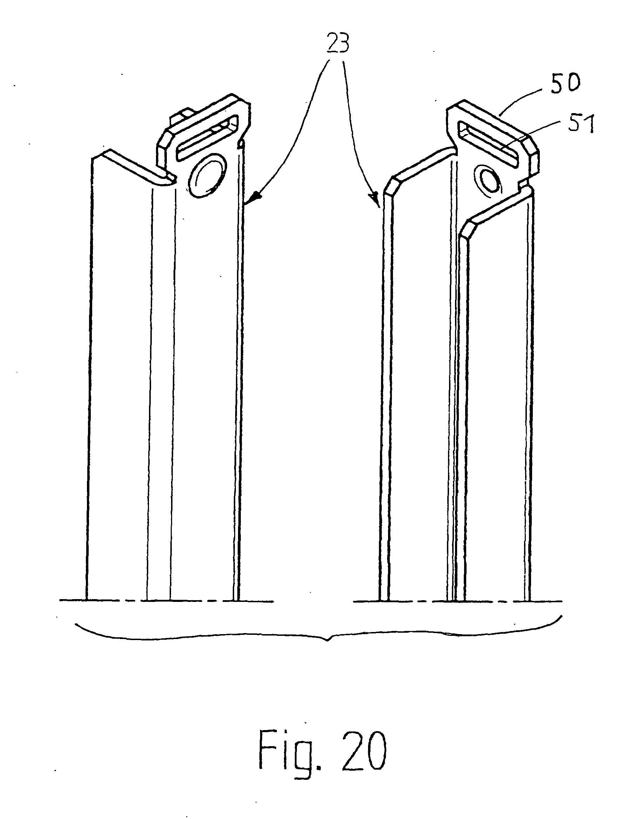

Eine Modifikation betrifft die Ausgestaltung des oberen Endes des Schubgliedes 23. Wie insbesondere aus Fig. 20 ersichtlich ist, die den oberen Abschnitt des Schubgliedes 23 aus zwei verschiedenen Blickwinkeln zeigt, ist die den Steg zwischen den beiden Schenkeln des Schubgliedes 23 liegende Wand nach oben verlängert, um eine Öse 50 mit einem querliegenden Langloch 51 zu bilden, dessen Breite größer als die Dicke der Lochscheibe 35 ist, die auch im modifizierten Ausführungsbeispiel aus zwei aufeinanderliegenden Tellerfedern besteht. Die oberen Enden der beiden Schenkel des Schubgliedes 23 sind bis auf eine jeweilige Kante eben, d.h. nicht abgeschrägt. Ein Kreissegment der Lochscheibe 35 greift in das Langloch 51 der Öse 50 des Schubgliedes 23 ein.

Eine weitere Modifikation besteht darin, daß zwischen dem Stützbügel 36 und dem oberen Ende der zylindrischen Druckfeder 37' eine Stützscheibe 52 angeordnet ist, die ein zentrales Loch aufweist. Die Druckfeder 37' liegt mit ihrem oberen Ende an der Unterseite der Stützscheibe 52 an, die sich ihrerseits mit ihrer Oberseite an der Unterseite des Stützbügels 52 abstützt.

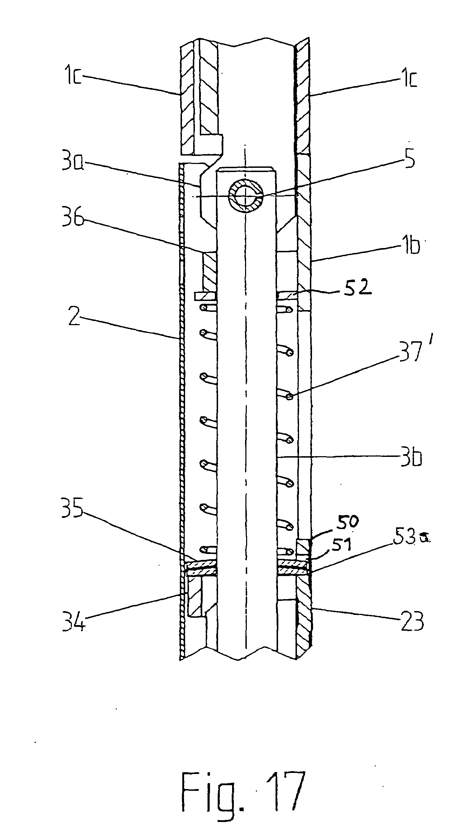

In der abgesenkten Stellung des Schubgliedes 23, wie sie in Fig. 17 gezeigt ist, liegt die Lochscheibe 35 auf dem Bügel 34 und dem unteren Rand 53a des Langloches 51 der Öse 50 des Schubgliedes 23 auf, wobei sie eine im wesentlichen waagrechte Lage einnimmt.

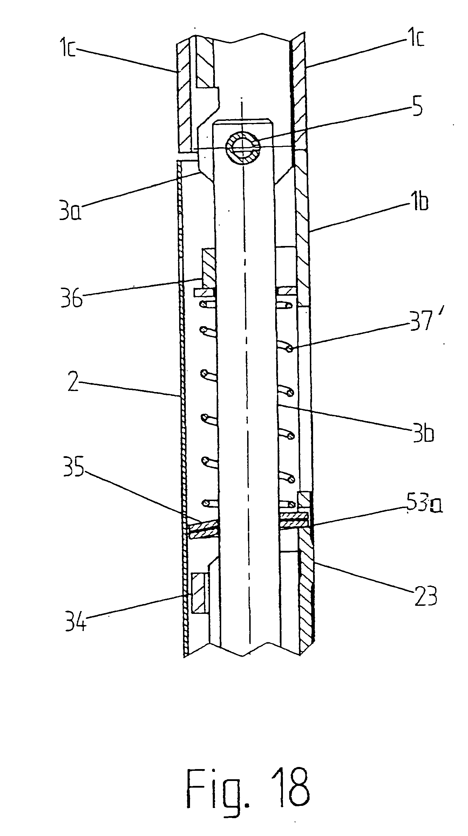

Wird das Schubglied 23 durch Ausklappen des Kniehebelgliedes 27 angehoben, wird die Lochscheibe 35 aufgrund ihrer Auflage auf dem unteren Rand 53a des Langloches 51 bis zu ihrer Verkantung mit dem unteren Abschnitt 3b des Hubgliedes 3 einseitig angehoben. Die resultierende Schräglage hat die Lochscheibe 35 nach einem anfänglichen Hub des Schubgliedes 23 von etwa 10 mm erreicht. Fig. 18 zeigt die Lage der Lochscheibe 35 und die des Schubgliedes 23 nach einer solchen anfänglichen Hubbewegung. Die Schrägstellung der Lochscheibe 35 und damit ihre Verkantung mit dem Hubgliedabschnitt 3b wird durch den Druck der Druckfeder 37 auf die Lochscheibe 35 gefördert.

Bei der weiteren Hubbewegung des Schubgliedes 23 wird das Hubglied 3 über die mit dem Hubgliedabschnitt 3b verkantete Lochscheibe 35 nach oben mitgenommen.

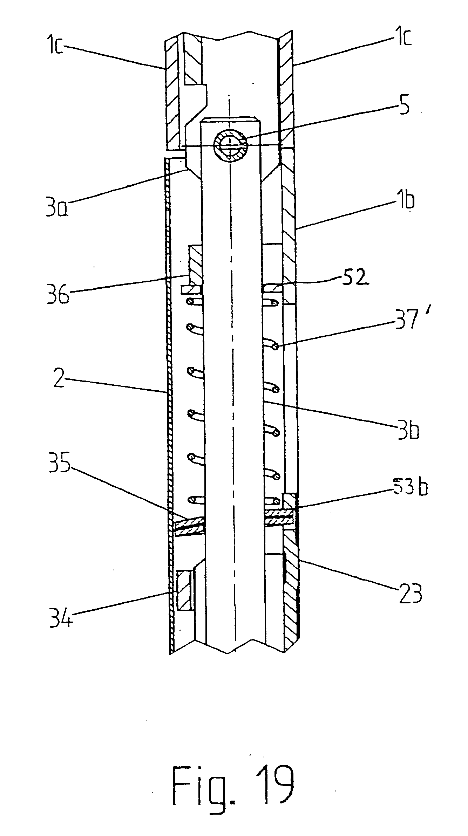

Wird das Schubglied 23 aus der angehobenen Stellung wieder abgesenkt, wird der obere Rand 53b des Langloches 53 in Kontakt mit der Oberseite der Lochscheibe 35 gebracht. Die weitere Abwärtsbewegung des Schubgliedes 23 zwingt die Lochscheibe 35, ihre Schräglage zu verringern und damit ihre Verkantung mit dem Hubgliedabschnitt 3b zu lösen. Die Lochscheibe 35 ist dann relativ zu dem Hubgliedabschnitt 3b nach unten verschiebbar und senkt sich zusammen mit dem Schubglied 23 ab. Fig. 19 zeigt den Zustand, in dem sich die Lochscheibe 35 zusammen mit dem Schubglied 23 relativ zu dem Hubglied 3 nach unten bewegen. Wie aus Fig. 19 ersichtlich ist, wird die Lochscheibe 35 beim Herunterfahren des Schubgliedes 23 nicht in die Horizontalage gebracht, da die Winkeländerung zwischen Verkantung und freiem Verschieben in Abwärtsrichtung minimal ist und die Schrägstellung der Lochscheibe 35 zudem durch die Druckfeder 37' forciert wird.

Erst, wenn die Lochscheibe 35 wieder auf dem Bügel 34 aufliegt und das Schubglied 23 ganz abgesenkt ist, befindet sich die Lochscheibe 35 wieder in der Horizontallage, wie aus Fig. 17 ersichtlich ist. Im Beispiel und in der Darstellung der Fig. 19 erfährt die Lochscheibe 35 durch ihre Anlage mit dem oberen Rand 53b des Langloches 51 einen Impuls von rechts oben, um aus dem Zustand der Verkantung mit dem Hubgliedabschnitt 3b in den Zustand der freien Verschiebbarkeit nach unten überzugehen. Denkbar ist auch ein Impuls auf die Lochscheibe 35 von links unten in Fig. 19, um diese Zustandsänderung herbeizuführen.

## Patentansprüche

1. Vorrichtung zum Anheben und Absenken eines über Rungen abgestützten Daches eines Nutzfahrzeugaufbaus, mit einem an einer Runge befestigbaren Gehäuse (1), einem relativ zu dem Gehäuse auf- und abwärts bewegbaren Hubglied (3), einer Kolben- und Zylindereinheit (9, 10), deren Kolben (10) und Zylinder (9) einen beweglichen und einen unbeweglichen Teil bilden, von denen der bewegliche Teil mit dem Hubglied (3) verbunden ist und der unbewegliche Teil am Gehäuse (1) befestigt ist, einem relativ zu dem Gehäuse (1) auf- und abwärts bewegbaren Schubglied (23), einem mit einer Handhabe (28) ausgebildeten Kniehebelantrieb zum Auf- und Abwärtsbewegen des Schubgliedes (23) und einer Kupplung (24) zum kraftschlüssigen Verbinden des Schub- und des Hubgliedes (23; 3) derart, daß bei einer Aufwärtsbewegung des Schubgliedes (23) das Hubglied (3) und der bewegliche Teil der Kolben- und Zylindereinheit (9, 10) mitbewegt werden, **dadurch gekennzeichnet, daß** der Kolben (10) den Zylinder (9) in zwei mit Hydraulikflüssigkeit gefüllte Kammern (17, 18) unterteilt, die über einen Strömungsweg (19) miteinander verbunden sind, in dem ein Absperrventil (20) angeordnet ist, das zwischen einer Offenstellung, in der sich der bewegliche Teil (9) auf- oder abwärts bewegen kann, und einer Geschlossenstellung, in der der bewegliche Teil (9) gegen eine Aufwärts- oder Abwärtsbewegung blockiert ist, umschaltbar ist, und die Kupplung (24) eine Abwärtsbewegung des Schubgliedes (23) relativ zu dem in einer angehobenen Lage sich befindenden Hubglied (3) zuläßt.

2. Vorrichtung nach Anspruch 1, **dadurch gekennzeichnet, daß** der Strömungsweg (19) einen im Kolbenboden (11) des Kolbens (10) gebildeten Strömungskanal (19a) aufweist und das Absperrventil (20) einen im Kolbenboden (11) gebildeten Ventilsitz (20c), der einen Abschnitt des Kanals (19a) begrenzt, und einen relativ zum Kolbenboden (11) beweglichen Ventilkörper (20a) aufweist, wobei in der Geschlossenstellung des Absperrventils (20) der Ventilkörper (20a) in Anlage mit dem Ventilsitz (20c) ist und in der Offenstellung des Absperrventils (20) der Ventilkörper (20a) vom Ventilsitz (20c) abgehoben ist.

3. Vorrichtung nach Anspruch 2, **dadurch gekennzeichnet, daß** der Ventilkörper (20a) an einem Ende eines Ventilschaftes (20b) angeordnet ist, der aus dem Zylinder (9) herausgeführt ist und ein außerhalb des Zylinders (9) liegendes Ende hat, das mit einer Kraft beaufschlagbar ist, die den Ventilschaft (20b) zusammen mit dem Ventilkörper (20a) in Längsrichtung des Ventilschaftes (20b) relativ zu dem Kolbenboden (11) verschiebt, wobei sich der ventilkörper (20a) vom Ventilsitz (20c) abhebt.3

4. Vorrichtung nach Anspruch 2, **dadurch gekennzeichnet, daß** der Kolbenboden (11) an einem Ende einer hohlen Kolbenstange (12) befestigt ist, die aus dem Zylinder (9) herausgeführt ist und ein außerhalb des Zylinders (9) liegendes Ende hat, das wenigstens in der Geschlossenstellung des Ventils (20) näher am Zylinder (9) als das Ende des Ventilschaftes (20) ist, der sich durch den Hohlraum der Kolbenstange (12) erstreckt und relativ zu der Kolbenstange (12) verschiebbar ist.

5. Vorrichtung nach Anspruch 4, **dadurch gekennzeichnet, daß** der Strömungskanal (19a) im Kolbenboden (11) mit einem Strömungskanal (19b) in der Kolbenstange (12) verbunden ist und der Strömungskanal (19a) in der Kolbenstange (12) in eine (18) der beiden Kammern (17, 18) des Zylinders (9) mündet.

6. Vorrichtung nach Anspruch 5, **dadurch gekennzeichnet, daß** der Strömungskanal (19b) in der Kolbenstange (19) im wesentlichen von einem Endabschnitt des Hohlraumes der Kolbenstange (12) gebildet ist und einen Ringraum (19c) umfaßt, der um den Ventilschaft (20b) herum angeordnet ist und mit wenigstens einem Verbindungskanal (19d) verbunden ist, der sich durch die Kolbenstange (12) erstreckt und an deren Außenfläche in einem Abschnitt endet, der an die eine Kammer (18) des Zylinders (9) grenzt.

7. Vorrichtung nach einem der vorhergehenden Ansprüche, **dadurch gekennzeichnet, daß** das Absperrventil (20) ein Rückschlagventil ist, das beim Aufwärtsbewegen des beweglichen Teiles (9) der Kolben- und Zylindereinheit (9, 10) von der Hydraulikflüssigkeit einer Kammer (18) in seine Offenstellung gedrängt wird und in einer Ruhelage des beweglichen Teiles (9) in der Geschlossenstellung durch eine Kraft gehalten wird, die durch eine manuell aufbringbare Gegenkraft überwindbar ist.

8. Vorrichtung nach einem der vorhergehenden Ansprüche, **dadurch gekennzeichnet, daß** der Kolben (10) der Kolben- und Zylindereinheit (9, 10) am Gehäuse (1) befestigt ist und der Zylinder (9) der Kolben- und Zylindereinheit (9, 10) mit dem Hubglied (3) verbunden ist.

9. Vorrichtung nach einem der vorhergehenden Ansprüche, **dadurch gekennzeichnet, daß** der Kniehebelantrieb zwei Kniehebelglieder (26, 27) aufweist, von denen das eine Kniehebelglied (26) an einem Ende an dem Gehäuse (1) angelenkt ist, und das andere Kniehebelglied (27) an einem Ende gelenkig mit dem Schubglied (23) verbunden ist und an seinem anderen Ende an einer zwischen dem einen und dem anderen, freien Ende des einen Kniehebelgliedes (26) liegenden Anlenkstelle mit dem einen Kniehebelglied (26) gelenkig verbunden ist, das im Bereich zwischen der Anlenkstelle und seinem anderen, freien Ende als Handhabe (28) ausgebildet ist, wobei das eine Kniehebelglied (26) an dem Gehäuse (1) an einer Stelle angelenkt ist, die oberhalb einer Stelle ist, an der das andere Kniehebelglied (27) gelenkig mit dem Schubglied (23) verbunden ist.

10. Vorrichtung nach Anspruch 9, wenn rückbezogen auf Anspruch 4, **dadurch gekennzeichnet, daß** das andere Kniehebelglied (27) an seinem einen Ende auch mit einem Gleitstück (25) verbunden ist, das auf der Kolbenstange (12) in deren Längsrichtung verschiebbar geführt ist.

11. Vorrichtung nach einem der Ansprüche 3 bis 10, **dadurch gekennzeichnet, daß** das eine Kniehebelglied (26) einen schwenkbar an ihm gelagerten Betätigungshebel (38) trägt, der einen Betätigungsarm (39) hat, der im eingeklappten Zustand des einen Kniehebelgliedes (26) mit dem Ende des Ventilschaftes (20b) in Anlage bringbar ist, wobei die Kraft, mit der das Ende des Ventilschaftes (20b) beaufschlagbar ist, um den Ventilkörper (20a) von seinem Sitz (20c) abzuheben, von dem Betätigungsarm (39) auf das Ende des Ventilschaftes (20b) übertragen wird und aus einer Schwenkbewegung des Betätigungshebels (38) resultiert.

12. Vorrichtung nach einem der vorhergehenden Ansprüche, **dadurch gekennzeichnet, daß** wenigstens im Bereich der Kupplung (24) das Schubglied (23) das Hubglied (3) umgreift und ein oberes Ende hat, das abgeschrägt ist, und die Kupplung (24) eine auf dem Hubglied (3) verschiebbare Lochscheibe (35), die an das abgeschrägte Ende des Schubgliedes in der dem abgeschrägten Ende entsprechenden Schrägstellung anlegbar ist, und eine Druckfeder (37) aufweist, die zwischen der Lochscheibe (35) und einem an dem Gehäuse befestigten Widerlager (36) auf der von dem abgeschrägten Ende des Schubgliedes abgekehrten Seite der Lochscheibe (35) angeordnet ist, wobei, wenn das Schubglied (23) aufwärts bewegt wird, die Lochscheibe (35) in Schrägstellung gegen die Wirkung der Feder (37) nach oben mitbewegt wird und an dem Hubglied (3) verkantet, derart, daß die Lochscheibe (35) das Hubglied (3) nach oben mitnimmt, und wobei, wenn das Schubglied (23) relativ zu dem Hubglied (3) abwärts bewegt wird, die Druckfeder (37) die Lochscheibe (35) aus ihrer Schrägstellung in eine Horizontalstellung drängt, in der sie sich relativ zu dem Hubglied (3) abwärts bewegen kann.

13. Vorrichtung nach einem der Ansprüche 1 bis 11, **dadurch gekennzeichnet, daß** wenigstens im Bereich der Kupplung (24) das Schubglied (23) das Hubglied (3) umgreift, und die Kupplung (24) eine auf dem Hubglied (3) verschiebbare Lochscheibe (35) und eine Druckfeder (37') aufweist, die zwischen der Lochscheibe (35) und einem an dem Gehäuse befestigten Widerlager (36) angeordnet ist, wobei, wenn das Schubglied (23) aufwärts bewegt wird, die Lochscheibe (35) bis zu ihrer Verkantung mit dem Hubglied (3) von dem Schubglied (23) einseitig angehoben wird und im Zustand ihrer Verkantung mit dem Hubglied (3) das Hubglied (3) nach oben mitnimmt, und wobei, wenn das Schubglied (23) relativ zu dem Hubglied (3) abwärts bewegt wird, das Schubglied (23) die Lochscheibe (35) durch Verringerung ihrer Schräglage aus der Verkantung mit dem Hubglied (3) löst, derart, daß sich danach die Lochscheibe (35) zusammen mit dem Schubglied (23) relativ zu dem Hubglied (3) abwärts bewegen.

14. Vorrichtung nach Anspruch 13, **dadurch gekennzeichnet, daß** an einem oberen Ende des Schubgliedes (23) eine Öse (50) mit einem Loch (51) ausgebildet ist, in das ein Segment der Lochscheibe (35) eingreift, wobei, wenn das Schubglied (23) aufwärts bewegt wird, ein unterer Rand (53a) des Loches (51) der Öse (50) an der Unterseite der Lochscheibe (35) anliegt, und, wenn das Schubglied (23) abwärts bewegt wird, ein oberer Rand (53b) des Loches (51) an der Oberseite der Lochscheibe (35) anliegt.

15. Vorrichtung nach einem der Ansprüche 12 bis 14, **dadurch gekennzeichnet, daß** die Lochscheibe (35) aus mindestens zwei aufeinanderliegenden Tellerfedern besteht, die gewölbt sind, wobei ihre konkave Seite abwärts zeigt.

16. Vorrichtung nach einem der Ansprüche 12 bis 15, **dadurch gekennzeichnet, daß** die Druckfeder (37, 37') eine Schraubenfeder ist, die das Hubglied (3) umringt und mit ihrem unteren Ende auf der Lochscheibe (35) anliegt und sich mit ihrem oberen Ende direkt oder indirekt an dem Widerlager (36) abstützt.

17. Vorrichtung nach Anspruch 16, **dadurch gekennzeichnet, daß** das Widerlager als Bügel (36) ausgebildet ist und zwischen dem Bügel (36) und der Druckfeder (37') eine Stützscheibe (52) mit Loch angeordnet ist.

18. Vorrichtung nach einem der vorhergehenden Ansprüche, **dadurch gekennzeichnet, daß** das Hubglied (3) und das Gehäuse (1) Anschlagflächen aufweisen, die aufeinandertreffen, um die Auf- und Abwärtsbewegung des Hubgliedes (3) zu begrenzen.

19. Vorrichtung nach Anspruch 17, **dadurch gekennzeichnet, daß** die Anschlagflächen an einem von dem Hubglied (3) abstehenden Zapfen (6), der in einem im Gehäuse (1) gebildeten Längsschlitz (7) bewegbar ist, und an den sich gegenüberliegenden Enden des Längsschlitzes (7) gebildet sind.

## Claims

1. Device for lifting and lowering a roof of a utility vehicle supported by stanchions, with a housing (1) which can be fixed to a stanchion, a lift element (3) which can be moved upwards and downwards relative to the housing, a piston and cylinder unit (9, 10), of which the piston (10) and cylinder (9) form a movable and an unmovable part, of which the movable part is connected to the lift element (3) and the unmovable part is fixed to the housing (1), a thrust element (23) which can be moved upwards and downwards relative to the housing (1), a toggle drive formed with a handle element (28) for upward and downward movement of the thrust element (23) and a coupling (24) for the force-locking connection of the thrust element and the lift element (23; 3) in such a way that during an upward movement of the thrust element (23) the lift element (3) and the movable part of the piston and cylinder unit (9, 10) are also moved, **characterised in that** the piston (10) divides the cylinder (9) into two chambers (17, 18) filled with hydraulic fluid which are connected to each other by a flow path (19) in which a shut-off valve (20) is arranged which can be switched between an open position in which the movable part (9) can move upwards or downwards and a closed position in which the movable part (9) is blocked against an upward or downward movement, and the coupling (24) allows a downward movement of the thrust element (23) relative to the lift element (3) which is in a raised position.

2. Device according to claim 1, **characterised in that** the flow path (19) comprises a flow passage (19a) formed in the bottom (11) of the piston (10) and the shut-off valve (20) comprises a valve seat (20c) formed in the piston bottom (11) which defines a section of the passage (19a), and a valve body (20a) which can be moved relative to the piston bottom (11), whereby in the closed position of the shut-off valve (20) the valve body (20a) is in abutment with the valve seat (20c) and in the open position of the shut-off valve (20) the valve body (20a) is lifted from the valve seat (20c).

3. Device according to claim 2, **characterised in that** the valve body (20a) is arranged at one end of a valve shaft (20b) which is guided out of the cylinder (9) and has an end lying outside of the cylinder (9) which can be impacted with a force which displaces the valve shaft (20b) together with the valve body (20a) in the longitudinal direction of the valve shaft (20b) relative to the piston bottom (11), whereby the valve body (20a) is lifted from the valve seat (20c).

4. Device according to claim 2, **characterised in that** the piston bottom (11) is fixed at one end of a hollow piston rod (12) which is guided out of the cylinder (9) and has an end lying outside of the cylinder (9) which at least in the closed position of the valve (20) is closer to the cylinder (9) than the end of the valve shaft (20) which extends through the hollow space of the piston rod (12) and can be displaced relative to the piston rod (12).

5. Device according to claim 4, **characterised in that** the flow passage (19a) in the piston bottom (11) is connected to a flow passage (19b) in the piston rod (12) and the flow passage (19a) in the piston rod (12) runs into one (18) of the two chambers (17, 18) of the cylinder (9).

6. Device according to claim 5, **characterised in that** the flow passage (19b) in the piston rod (19) is formed essentially by an end section of the hollow space of the piston rod (12) and includes an annular space (19c) which is arranged around the valve shaft (20b) and is connected to at least one connection passage (19b) which extends through the piston rod (12) and ends on its outer surface in a section which borders on one chamber (18) of the cylinder (9).

7. Device according to one of the preceding claims, **characterised in that** the shut-off valve (20) is a non-return valve which, upon upward movement of the movable part (9) of the piston and cylinder unit (9, 10) is forced by the hydraulic fluid of a chamber (18) into its open position and is held in a position of rest of the movable part (19) in the closed position by a force which can be overcome by a manually applied counteracting force.

8. Device according to one of the preceding claims, **characterised in that** the piston (10) of the piston and cylinder unit (9, 10) is fixed to the housing (1) and the cylinder (9) of the piston and cylinder unit (9, 10) is connected to the lift element (3).

9. Device according to one of the preceding claims, **characterised in that** the toggle drive comprises two knee joint elements (26, 27), of which one knee joint element (26) is connected at one end to the housing (1) and the other knee joint element (27) is connected at one end in a jointed way to the thrust element (23) and at its other end is connected in a jointed way, at a link point lying between one and the other, free end of one knee joint element (26), to one knee joint element (26) which is formed in the region between the link point and its other, free end as a handle element (28), whereby one knee joint element (26) is connected to the housing (1) at a point which is above a point at which the other knee joint element (27) is connected in a jointed way to the thrust element (23).

10. Device according to claim 9, referring back to claim 4, **characterised in that** the other knee joint element (27) is also connected at one end to a sliding member (25) which is guided so as to be displaceable on the piston rod (12) in its longitudinal direction.

11. Device according to one of the claims 3 to 10, **characterised in that** one knee joint element (26) has an actuating lever (28) mounted pivotally thereon which has an actuating arm (39) which can be brought, in the folded-in state of one knee joint element (26), into abutment with the end of the valve shaft (20b), whereby the force with which the end of the valve shaft (20b) can be impacted in order to lift the valve body (20a) from its seat (20c) is transferred from the actuating arm (39) to the end of the valve shaft (20b) and results from a pivoting movement of the actuating lever (38).

12. Device according to one of the preceding claims, **characterised in that** at least in the region of the coupling (24) the thrust element (23) engages around the lift element (3) and has an upper end which is bevelled, and the coupling comprises a perforated disc (35) which can be displaced on the lift element (3) which can be laid against the bevelled end of the thrust element in the inclined position corresponding to the bevelled end and a compression spring (38) which is arranged between the perforated disc (35) and an abutment element (36) fixed to the housing on the side of the perforated disc (35) facing away from the bevelled end of the thrust element, whereby when the thrust element (23) is moved upwards the perforated disc (35) is also moved upwards in the inclined position against the effect of the spring (37) and cants on the lift element (3) in such a way that the perforated disc (35) also moves the lift element (3) upwards and, whereby when the thrust element (23) is moved downwards relative to the lift element (3) the compression spring (37) forces the perforated disc (35) out of its inclined position into a horizontal position, in which it can move downwards relative to the lift element (3).

13. Device according to one of the claims 1 to 11, **characterised in that** at least in the region of the coupling (24) the thrust element (23) engages around the lift element (3), and the coupling (24) comprises a perforated disc (35) which can be displaced on the lift element (3) and a compression spring (37') which is arranged between the perforated disc (35) and an abutment element (36) fixed to the housing, whereby when the thrust element (23) is moved upwards the perforated disc (35) is lifted by the thrust element (23) on one side until it cants with the lift element (3), and in the canted state with the lift element (3) also moves the lift element (3) upwards and whereby when the thrust element (23) is moved downwards relative to the lift element (3) the thrust element (23) releases the perforated disc from its canted position with the lift element (3) by reducing its inclined position in such a way that the perforated disc (35) can then move downwards, together with the thrust element (23), relative to the lift element (3).

14. Device according to claim 13, **characterised in that** at one upper end of the thrust element (23) an eye (50) is formed with a hole (51), in which one segment of the perforated disc (35) engages, whereby when the thrust element (23) is moved upwards a lower edge (53a) of the hole (51) of the eye (50) lies against the lower face of the perforated disc (35) and when the thrust element (23) is moved downwards an upper edge (53b) of the hole (51) lies against the upper face of the perforated disc (35).

15. Device according to one of the claims 12 to 14, **characterised in that** the perforated disc (35) consists of at least two plate springs lying one on top of the other which are cambered, whereby their concave side points downwards.

16. Device according to one of the claims 12 to 15, **characterised in that** the compression spring (37, 37') is a coil spring which surrounds the lift element (3) and lies with its lower end on the perforated disc (35) and rests with its upper end directly or indirectly on the abutment element (36).

17. Device according to claim 16, **characterised in that** the abutment element is formed as a bar (36) and a support disc (52) with a hole is arranged between the bar (36) and the compression spring (37').

18. Device according to one of the preceding claims, **characterised in that** the lift element (3) and the housing (1) comprise stop faces which come into contact with each other to delimit the upward and downward movement of the lift element (3).

19. Device according to claim 17, **characterised in that** the stop faces are formed on a spigot element (6) standing away from the lift element (3) which can be moved in a longitudinal slot (7) formed in the housing (1) and on the opposing ends of the longitudinal slot (7).

## Revendications

1. Dispositif permettant de soulever et d'abaisser un toit soutenu par l'intermédiaire d'un rancher d'une structure de véhicule utilitaire, comportant un boîtier (1) pouvant être fixé sur un ranchers, un organe de levage (3) mobile vers le haut et vers le bas par rapport au boîtier, une unité de piston et de cylindre (9, 10), dont le piston (10) et le cylindre (9) constituent un élément mobile et un élément immobile, dont l'élément mobile est relié à l'organe de levage (3) et l'élément immobile est fixé au boîtier (1), un organe de poussée (23) pouvant se déplacer vers le haut et vers le bas par rapport au boîtier (1), un entraînement à genouillère doté d'une poignée (28), permettant de déplacer vers le haut et vers le bas l'organe de poussée (23) et un accouplement (24) permettant la liaison par conjugaison de forme de l'organe de poussée et de l'organe de levage (23 ; 3) de telle sorte que, lors d'un déplacement.vers le haut de l'organe de poussée (23), l'organe de levage (3) et l'élément mobile de l'unité de piston et de cylindre (9, 10) sont déplacés conjointement, **caractérisé en ce que** le piston (10) subdivise le cylindre (9) en deux chambres (17, 18) remplies de liquide hydraulique, lesquelles chambres sont reliées l'une à l'autre par l'intermédiaire d'une trajectoire d'écoulement (19) dans laquelle est disposée une soupape d'arrêt (20), qui peut passer d'une position ouverte, dans laquelle l'élément mobile (9) peut se déplacer vers le haut ou vers le bas et une position fermée dans laquelle l'élément mobile (9) est bloqué et ne peut effectuer un mouvement vers le haut ou vers le bas, et l'accouplement (24) permet un déplacement vers le bas de l'organe de poussée (23) par rapport à l'organe de levage (3) qui se trouve dans une position soulevée.

2. Dispositif selon la revendication 1, **caractérisé en ce que** la trajectoire d'écoulement (19) présente un canal d'écoulement (19a) formé dans le fond de piston (11) du piston (10), et la soupape d'arrêt (20) délimite un siège de soupape (20c) formé dans le fond de piston (11), qui délimite une section du canal (19a), et présente un corps de soupape (20a) mobile par rapport au fond de piston (11), moyennant quoi, dans la position fermée de la soupape d'arrêt (20), le corps de soupape (20a) prend appui sur le siège de soupape (20c) et, dans la position ouverte de la soupape d'arrêt (20), le corps de soupape (20a) est relevé du siège de soupape (20c).

3. Dispositif selon la revendication 2, **caractérisé en ce que** le corps de soupape (20a) est disposé à une extrémité d'une queue de soupape (20b), qui sort du cylindre (9) et présente une extrémité se trouvant en dehors de cylindre (9), qui peut être soumise à une force, laquelle déplace la queue de soupape (20b) conjointement avec le corps de soupape (20a) dans la direction longitudinale de la queue de soupape (20b) par rapport au fond de piston (11), moyennant quoi le corps de soupape (20a) se relève du siège de soupape (20c).

4. Dispositif selon la revendication 2, **caractérisé en ce que** le fond de piston (11) est fixé à une extrémité d'une tige de piston (12) creuse, qui sort du cylindre (9) et présente une extrémité se trouvant en dehors du cylindre (9), qui, au moins dans la position fermée de la soupape (20), est plus proche du cylindre (9) que de l'extrémité de la queue de soupape (20), laquelle s'étend dans l'espace creux de la tige de piston (12) et peut se déplacer par rapport à la tige de piston (12).

5. Dispositif selon la revendication 4, **caractérisé en ce que** le canal d'écoulement (19a), dans le fond de piston (11), est relié à un canal d'écoulement (19b) dans la tige de piston (12), et le canal d'écoulement (19a) dans la tige de piston (12) débouche dans l'une (18) des deux chambres (17, 18) du cylindre (9).

6. Dispositif selon la revendication 5, **caractérisé en ce que** le canal d'écoulement (19b) dans la tige de piston (19) est constitué essentiellement par une section d'extrémité de l'espace creux de la tige de piston (12) et comporte un espace annulaire (19c) qui est disposé autour de la queue de soupape (20b) et est relié à au moins un canal de raccordement (19d) qui s'étend au travers de la tige de piston (12) et se termine au niveau d'une surface externe par une section qui est adjacente à une chambre (18) du cylindre (9).

7. Dispositif selon l'une quelconque des revendications précédentes, **caractérisé en ce que** la soupape d'arrêt (20) est un clapet anti-retour, qui, lors du déplacement vers le haut de l'élément mobile (9) de l'unité de piston et de cylindre (9, 10), est poussé par le liquide hydraulique d'une chambre (18) dans sa position ouverte et est maintenu dans une position de repos de l'élément mobile (9) dans la position fermée grâce à une force qui peut être surmontée grâce à une force antagoniste pouvant être exercée manuellement.

8. Dispositif selon l'une quelconque des revendications précédentes, **caractérisé en ce que** le piston (10) de l'unité de piston et de cylindre (9, 10) est fixé sur le boîtier (1), et le cylindre (9) de l'unité de piston et de cylindre (9, 10) est relié à l'organe de levage (3).

9. Dispositif selon l'une quelconque des revendications précédentes, **caractérisé en ce que** l'entraînement à genouillère présente deux organes de genouillère (26, 27), dont le un organe de genouillère (26) est articulé au niveau d'une extrémité sur le boîtier (1), et l'autre organe de genouillère (27) est relié au niveau d'une extrémité de manière articulée avec l'organe de poussée (23) et est relié, au niveau de son autre extrémité, à un point d'articulation se trouvant entre une extrémité et l'autre extrémité libre du un organe de genouillère (26) avec le un organe de genouillère (26), qui est configuré dans une zone se trouvant entre le point d'articulation et son autre extrémité libre sous la forme d'une poignée (28), moyennant quoi le un organe de genouillère (26) est articulé sur le boîtier (1) au niveau d'un emplacement qui se trouve au-dessus d'un emplacement auquel l'autre organe de genouillère (27) est relié de manière articulée avec l'organe de poussée (23).

10. Dispositif selon la revendication 9, en revenant à la revendication 4, **caractérisé en ce que** l'autre organe de genouillère (27), au niveau de son extrémité, est également relié à une pièce coulissante (25), qui est guidée de manière à pouvoir se déplacer sur la tige de piston (12) dans sa direction longitudinale.

11. Dispositif selon l'une quelconque des revendications 3 à 10, **caractérisé en ce que** le un organe de genouillère (26) supporte un levier d'actionnement (38) disposé de manière pivotante sur celui-ci, qui présente un bras d'actionnement (39), lequel peut prendre appui, à l'état rabattu du un organe de genouillère (26), sur l'extrémité de la queue de soupape (20b), moyennant quoi la force qui peut s'exercer sur l'extrémité de la queue de soupape (20b) afin de relever le corps de soupape (20a) de son siège (20c) est transmise par le bras d'actionnement (39) sur l'extrémité de la queue de soupape (20a) et résulte d'un déplacement pivotant du levier d'actionnement (38).

12. Dispositif selon l'une quelconque des revendications précédentes, **caractérisé en ce qu'**au moins dans la zone de l'accouplement (24), l'organe de poussée (23) enveloppe l'organe de levage (3), et a une extrémité supérieure qui est inclinée et l'accouplement (24) présente un disque ajouré (35) mobile sur l'organe de levage (3), qui peut être déposé sur l'extrémité inclinée de l'organe de poussée dans la position oblique correspondant à l'extrémité inclinée, et représente également un ressort de pression (37), qui est disposé entre le disque ajouré (35) et un contrefort (36) fixé sur le boîtier, sur le côté opposé à l'extrémité inclinée de l'organe de poussée du disque ajouré (35), moyennant quoi, lorsque l'organe de poussée (23) est déplacé vers le haut, le disque ajouré (35) est entraîné vers le haut dans la position oblique à l'encontre de l'action du ressort (37) et se coince sur l'organe de levage (3) de telle sorte que le disque ajouré (35) entraîne l'organe de levage (3) vers le haut et moyennant quoi, lorsque l'organe de poussée (23) est déplacé vers le bas par rapport à l'organe de levage (3), le ressort de pression (37) fait passer le disque perforé (35) de sa position oblique à une position horizontale, dans laquelle il se déplace vers le bas par rapport à l'organe de poussée (3).

13. Dispositif selon l'une quelconque des revendications 1 à 11, **caractérisé en ce que**, au moins dans la zone de l'accouplement (24), l'organe de poussée (23) enveloppe l'organe de levage (3), et l'accouplement (24) présente un disque ajouré (35) pouvant se déplacer sur l'organe de levage (3) et un ressort de pression (37'), qui est disposé entre le disque ajouré (35) et un contrefort (36) fixé sur le boîtier, moyennant quoi, lorsque l'organe de poussée (23) est déplacé vers le haut, le disque ajouré (35) est soulevé d'un côté jusqu'à être ancré avec l'organe de levage (3) par l'organe de poussée (23) et, dans l'état de son ancrage avec l'organe de levage (3), entraîne l'organe de levage (3) vers le haut et moyennant quoi, lorsque l'organe de poussée (23) est déplacé vers le bas par rapport à l'organe de levage (3), l'organe de poussée (23) annule l'ancrage du disque ajouré (35) avec l'organe de levage (3) en réduisant sa position oblique de telle sorte que, de telle sorte que le disque ajouré (35) alors peut se déplacer vers le bas conjointement avec l'organe de poussée (23) par rapport à l'organe de levage (3).

14. Dispositif selon la revendication 13, **caractérisé en ce que**, au niveau d'une extrémité supérieure de l'organe de poussée (23) est configuré un oeillet (50) avec un trou (51), dans lequel s'engrène un segment du disque ajouré (35), lorsque l'organe de poussée (23) est déplacé vers le haut, un bord inférieur (53a) du trou (51) de l'oeillet (50) est adjacent à la face inférieure du disque ajouré (35) lorsque l'organe de poussée (23) se déplace vers le bas, un bord supérieur (53b) du trou (51) est adjacent à la face supérieure du disque ajouré (35).

15. Dispositif selon l'une quelconque des revendications 12 à 14, **caractérisé en ce que** le disque ajouré (35) est constitué d'au moins deux rondelles Belleville disposées l'une sur l'autre, qui sont incurvées, moyennant quoi leur face concave est orientée vers le bas.

16. Dispositif selon l'une quelconque des revendications 12 à 15, **caractérisé en ce que** le ressort de pression (37, 37') est un ressort cylindrique qui entoure l'organe de levage (3) et repose avec son extrémité inférieure sur le disque ajouré (35) et repose avec son extrémité supérieure, directement ou indirectement, sur le contrefort (36).

17. Dispositif selon la revendication 16, **caractérisé en ce que** le contrefort est configuré sous la forme d'un étrier (36) et, entre l'étrier (36) et le ressort de pression (37') est disposé un disque de maintien (52) avec un trou.

18. Dispositif selon l'une quelconque des revendications précédentes, **caractérisé en ce que** l'organe de levage (3) et le boîtier (1) présentent des surfaces de butée, qui sont orientées l'une vers l'autre, afin de limiter le déplacement vers le haut et vers le bas de l'organe de levage (3).

19. Dispositif selon la revendication 17, **caractérisé en ce que** les surfaces de butée sont formées sur un tourillon (6) dépassant de l'organe de levage (3), qui peut se déplacer dans une fente longitudinale (7) formée dans le boîtier (1), et au niveau des extrémités opposées de la fente longitudinale (7).
